# EUROPEAN PATENT APPLICATION

(11) **EP 4 375 912 A1**
(43) Date of publication of application: **29.05.2024**
(21) Application number: 22306746.3
(22) Date of filing: 25.11.2022
(51) Int. Cl.: G06Q 30/0203, G06Q 10/10, G06N 5/022, G10L 15/00

(54) **SYSTEMS AND METHODS FOR IMPROVED USER EXPERIENCE RESULTS ANALYSIS**

(71) Applicant: Userzoom Technologies, Inc., Dover, DE 19901 (US)
(72) Inventor: Bernabe Miguel, Laura, Denver (US); Kieffer, Matthieu, Herblay-sur-Seine (FR); Chuttarsing, Adrien, Paris (FR)
(74) Representative: Murgitroyd & Company

(57) **Abstract**

Systems and methods for improving the analysis of results from a user experience study are provided. In some embodiments, study results are converted into text if needed. The text is segmented, and qualifiers and entity pairs are identified within the text (semantic analysis). Sentiment for these pairs is also determined. This information is utilized to generate one or more of different analyses of the study results. This includes, for example, the automatic generation of video and/or text clips from the study results that are of greatest interest to the user. This is performed by scoring certain keywords in the segments, generating the clips based upon the scores, and then filtering using trained machine learning models. Another analysis includes the generation of a semantic matrix with sentiment color coding. Intensity of the color may be defined by the frequency the entity-qualifier pair occurs.

## Description

### BACKGROUND

The present invention relates to systems and methods for the AI assisted analysis of user experience studies that allow for insight generation for the user experience of a website. Generally, this type of testing is referred to as "User Experience" or merely "UX" testing.

The Internet provides new opportunities for business entities to reach customers via web sites that promote and describe their products or services. Often, the appeal of a web site and its ease of use may affect a potential buyer's decision to purchase the product/service.

Especially as user experiences continue to improve and competition online becomes increasingly aggressive, the ease of use by a particular retailer's website may have a material impact upon sales performance. Unlike a physical shopping experience, there is minimal hurdles to a user going to a competitor for a similar service or good. Thus, in addition to traditional motivators (e.g., competitive pricing, return policies, brand reputation, etc.) the ease of a website to navigate is of paramount importance to a successful online presence.

As such, assessing the appeal, user friendliness, and effectiveness of a web site is of substantial value to marketing managers, web site designers and user experience specialists; however, this information is typically difficult to obtain. Focus groups are sometimes used to achieve this goal but the process is long, expensive and not reliable, in part, due to the size and demographics of the focus group that may not be representative of the target customer base.

In more recent years advances have been made in the automation and implementation of mass online surveys for collecting user feedback information. Typically, these systems include survey questions, or potentially a task on a website followed by feedback requests. While such systems are useful in collecting significant quantities of information regarding user experiences, a new issue arises of being able to efficiently collect not only quantity of information, but also information of *quality.* Secondly, given the significant volume of information collected, the data may become unwieldy for a user experience researcher to properly analyze (even when the data is of good quality).

It is therefore apparent that an urgent need exists for advancements in the analysis of data from user experience studies in order to curate the data for user experience researcher consumption, and to provide feedback loops to improve data quality. Such systems and methods allow for determination of what data needs to be collected, whom it should be collected from, and once collected, what parts of the data are important for review.

### SUMMARY

To achieve the foregoing and in accordance with the present invention, systems and methods for improvements in user experience results analysis is provided. These systems and methods are capable of improving the selection of tasks to be completed in the user experience study series, alter participants/participant engagement, and selectively determine results data of particular interest.

The methods and systems for improved data analysis include storing information in a standardized format in a network based non-transitory storage device having insights stored thereon, providing remote access to participants over a network so that any one of the participants can provide study results in real-time, wherein the one of the participants provides the study results in a non-standardized format dependent upon the hardware and software platform used by the one of the participants, converting, by a server, the non-standardized study results into a standardized format, using at least one artificial intelligence (AI) model by: segmenting at least one text from the study results into a plurality of segments of information, identifying at least one entity and qualifier in the plurality of segment of information, converting the at least one entity and qualifier into at least one semantic pair, and identifying a sentiment for each of the at least one semantic pair.

After this conversion, an updated insight is generated by synthesizing the at least one the semantic pair and sentiment. The method automatically generates a message with the updated insight, and the message is transmitted to at least one UX researcher over the network so the UX researcher has real-time access to the updated insight. The converting the entity and qualifier pairs into a semantic pair includes substituting the entity and qualifier with a prototypical entity and qualifier, respectively. The segmenting may be by sentence or by a topical segment.

The study results include at least one of free-form text and video recordings. The video recordings are transcribed. The identifying a sentiment is performed by an AI model. Further, the entity and qualifier are identified by an AI model. The identifying the sentiment includes identifying polarity and severity of the semantic pair. Further, the entity is a noun and the qualifier is one of an adjective or a verb-adverb pair.

This analysis may be leveraged for a number of down-stream activities. For example, it is possible to generate automatic clips from the videos. This includes the additional steps of isolating an audio waveform from the video file and checking it for a threshold of speaking ratio prior to transcription. The speech ratio is determined based upon ML model analysis of the waveform against speech patterns. The configured threshold for the speech ratio is set to approximately 10%, or is dynamic based upon at least one of study results already collected, participant attributes and task type.

After transcription, it is segmented. At least one initial video clip is then generated responsive to a summation of keyword scores located in each segment, wherein the at least one initial video clip is determined upon the respective timing metadata from the transcription segment. The keyword scores are generated by an unsupervised ML analysis of all words in a corpus. In some cases, the keyword scores are generated by discarding words below a minimum threshold and renormalizing the remaining words scores as keywords. The segments are sentences or contiguous topically related sentences. At least one segment from the transcription that corresponds to study questions that are read out loud by a participant rare removed. The at least one initial video clip is then filtered by a supervised machine learning (ML) model to generate at least one final video clips.

In another form of analysis, the generation of an insight matrix for a user experience (UX) study is performed. Again, the entity and qualifier pairs in a corpus of study results is identified, as is the sentiment for the pairs. The semantic pairs are then clustered by the same entity and qualifier to generate a plurality of semantic pair clusters. All sentiments for each semantic pair cluster are summed, and a plurality of entities and a plurality of qualifiers are specifically selected. These entities are then graphed on one axis of a matrix and the qualifiers on the other axis of the matrix. The color coding the intersections of each entity and qualifier provide information regarding their sentiment and the intensity of the color coding may be altered by number of occurrences of each entity and qualifier.

The method may enable the filtering of the matrix. This filtering is by at least one of sentiment, entity, qualifier, semantic pair clusters, number of semantic pairs in a cluster, participant attributes and task. The method may also display a subset of segments from which the semantic pairs were derived when a user selects a cell of the matrix.

All insights may be subjected to further analysis whereby a machine learning model identifies insights of interest and uses these insights to generate a curated set of selected video clips, text segments, and at least one filtered 2D matrix.

In yet another method, the altering of a user experience (UX) study automatically is disclosed. The user experience study comprising a plurality of tasks, which are presented to a sourced set of participants to generate the study results. As discussed before, insights from these results are generated. Outlier values for the insights are identified using a machine learning model to the collected insights to identify entity qualifier pairs of interest. applying semantic and sentiment analysis to the study results to generate insights. In order to test these insights, the system may present specific tasks to a specific participant type, alter the frequency of a given task type in the study, or even generate entirely new tasks for the study.

In particular, in some embodiments, the inventions include a method for automatic clip generation for a user experience (UX) study comprising: receiving a video file recording of a study output; isolating an audio waveform from the video file; transcribing the audio waveform to a text file; segmenting the transcription into segments; generating at least one initial video clip responsive to a summation of keyword scores located in each segment, wherein the at least one initial video clip is determined upon the respective timing metadata from the transcription segment; and filtering the at least one initial video clip by a supervised machine learning (ML) model to generate at least one final video clips. The invention may further comprising filtering the audio waveform by a speech ratio prior to transcription, wherein the speech ratio is determined based upon ML model analysis of the waveform against speech patterns, wherein the speech ratio filtering discards audio waveforms below a configured threshold, and wherein the configured threshold is approximately 10% or wherein the configured threshold is dynamic based upon at least one of study results already collected, participant attributes and task type. The method may also include wherein the keyword scores are generated by an unsupervised ML analysis of all words in a corpus, and wherein the keyword scores are generated by discarding words below a minimum threshold and renormalizing the remaining words scores as keywords. The method may also include wherein the segments are sentences or contiguous topically related sentences. The method may further comprise removing at least one segment from the transcription that corresponds to study questions that are read out loud by a participant.

In another embodiment, a method for the generation of an insight matrix for a user experience (UX) study is provided comprising: identifying entity and qualifier pairs in a corpus of study results, wherein each entity and qualifier pair is a semantic pair; identifying a sentiment for each semantic pair; clustering the semantic pairs by the same entity and qualifier to generate a plurality of semantic pair clusters; summing all sentiments for each semantic pair cluster; selecting a plurality of entities and a plurality of qualifiers; and graphing the entities on one axis of a matrix and the qualifiers on the other axis of the matrix, and color coding the intersections of each entity and qualifier by their sentiment and altering intensity of the color coding by number of occurrences of each entity and qualifier. The method may further comprise enabling filtering of the matrix, wherein the filtering is by at least one of sentiment, entity, qualifier, semantic pair clusters, number of semantic pairs in a cluster, participant attributes and task. The method may also further comprise segmenting the corpus of study results into segments, wherein the segments are video clips and wherein the segments are contiguous topically related sentences. The method may further comprise displaying the segments and displaying a subset of segments from which the semantic pairs were derived when a user selects a cell of the matrix. The method may also further comprise storing the matrix in a standardized format in a network based non-transitory storage device; providing remote access to participants over a network so that any one of the participants can provide study results in real-time, wherein the one of the participants provides the study results in a non-standardized format dependent upon the hardware and software platform used by the one of the participants; converting, by a server, the non-standardized study results into a standardized format, wherein the standardized format is an updated matrix; automatically generating a message with the updated matrix; and transmitting the message to at least one UX researcher over the network so the UX researcher has real-time access to the updated matrix. The method may also further comprise generating a graphical user interface (GUI) populated with the matrix, a listing of curated video clips automatically isolated from the corpus of study results, a listing of text clips isolated from the corpus of study results, and access to the underlying full video and text of the corpus of study results. The method may also further comprise sorting the matrix by sentiment, occurrence and relevance, wherein the relevance compares the entity and qualifier against a dictionary of user experience entities derived from an unsupervised machine learning model.

In another embodiment, a method for the alteration of a user experience (UX) study is provided comprising: generating a user experience study comprising a plurality of tasks; sourcing a plurality of participants for the user experience study; running at least one of the tasks with a subset of the plurality of participants to generate study results; applying semantic and sentiment analysis to the study results to generate insights; identifying outlier values for the insights; and altering the tasks responsive to the outlier values. The method may include wherein the semantic analysis generates entity qualifier pairs and wherein the sentiment analysis generates a polarity for each entity qualifier pair. The method may include wherein the identifying outlier values includes applying a machine learning model to the collected insights to identify entity qualifier pairs of interest. The method may include wherein the altering includes selecting a specific task from the plurality of tasks to run with a specific participant, or wherein the altering includes selecting a specific task from the plurality of tasks to run at a higher frequency, or wherein the altering includes generating a new task that is not part of the plurality of tasks.

Another embodiment may include a method for the generation of a fully automated insight for a user experience (UX) study comprising: identifying entity and qualifier pairs in a corpus of study results, wherein each entity and qualifier pair is a semantic pair; identifying a sentiment for each semantic pair; clustering the semantic pairs by the same entity and qualifier to generate a plurality of semantic pair clusters; applying a machine learning model to the plurality of semantic pair clusters to identify clusters of interest; and curating at least one of video clips, text segments and a 2D semantic-sentiment matrix responsive to the clusters of interest. The method may further comprise enabling filtering of the curated at least one of video clips, text segments and 2D semantic-sentiment matrix. The method may also further comprise selecting top n relevant insights from the 2D semantic-sentiment matrix, wherein n is a configured integer, and wherein the insights are ranked in relevancy by an AI model.

Note that the various features of the present invention described above may be practiced alone or in combination. These and other features of the present invention will be described in more detail below in the detailed description of the invention and in conjunction with the following figures.

### BRIEF DESCRIPTION OF THE DRAWINGS

In order that the present invention may be more clearly ascertained, some embodiments will now be described, by way of example, with reference to the accompanying drawings, in which:
Figure 1A is a first logical diagram of an example system for user experience studies, in accordance with some embodiment;
Figure 1B is a second logical diagram of an example system for user experience studies, in accordance with some embodiment;
Figure 1C is a third logical diagram of an example system for user experience studies, in accordance with some embodiment;
Figure 2 is an example logical diagram of the user experience testing system, in accordance with some embodiment;
Figure 3A-3C are flow diagrams illustrating an exemplary process of interfacing with potential candidates and performing user experience testing according to an embodiment of the present invention;
Figure 4 is a simplified block diagram of a data processing unit configured to enable a participant to access a web site and track participant's interaction with the web site according to an embodiment of the present invention;
Figure 5 is an example logical diagram of an analytics driven user experience ecosystem, in accordance with some embodiments;
Figure 6A is an example logical diagram of the test builder, in accordance with some embodiments;
Figure 6B is a logical diagram of the participant selection server, in accordance with some embodiment;
Figure 7 is an example logical diagram of a participant test portal, in accordance with some embodiments
Figure 8 is an example logical diagram of the AI algorithm processor, in accordance with some embodiments;
Figure 9 is an example logical diagram of the analytics module, in accordance with some embodiments;
Figure 10 is a flow diagram for the example process of a user experience end-to-end workflow, in accordance with some embodiment;
Figure 11 is a flow diagram for the example sub-process of test building, in accordance with some embodiment;
Figure 12 is a flow diagram for the example sub-process of participant management, in accordance with some embodiment t;
Figure 13 is a flow diagram for the example sub-process of AI algorithm workflow, in accordance with some embodiment;
Figure 14 is a flow diagram for the example sub-process of automatic clip generation, in accordance with some embodiment;
Figure 15A and 15B are flow diagrams for the example sub-processes of insight analysis, in accordance with some embodiment;
Figure 16 is a flow diagram for the example sub-process of recommendation generation, in accordance with some embodiment;
Figure 17 is a flow diagram for the example sub-process of study adjustment incorporation, in accordance with some embodiment; and
Figure 18 is an example illustration for an analytics matrix display, in accordance with some embodiment.

### DETAILED DESCRIPTION

The present invention will now be described in detail with reference to several embodiments thereof as illustrated in the accompanying drawings. In the following description, numerous specific details are set forth in order to provide a thorough understanding of embodiments of the present invention. It will be apparent, however, to one skilled in the art, that embodiments may be practiced without some or all of these specific details. In other instances, well known process steps and/or structures have not been described in detail in order to not unnecessarily obscure the present invention. The features and advantages of embodiments may be better understood with reference to the drawings and discussions that follow.

Aspects, features and advantages of exemplary embodiments of the present invention will become better understood with regard to the following description in connection with the accompanying drawing(s). It should be apparent to those skilled in the art that the described embodiments of the present invention provided herein are illustrative only and not limiting, having been presented by way of example only. All features disclosed in this description may be replaced by alternative features serving the same or similar purpose, unless expressly stated otherwise. Therefore, numerous other embodiments of the modifications thereof are contemplated as falling within the scope of the present invention as defined herein and equivalents thereto. Hence, use of absolute and/or sequential terms, such as, for example, "will," "will not," "shall," "shall not," "must," "must not," "first," "initially," "next," "subsequently," "before," "after," "lastly," and "finally," are not meant to limit the scope of the present invention as the embodiments disclosed herein are merely exemplary.

The present invention relates to the generation, deployment, results collection, and AI driven workflows for the analysis of the results. Some descriptions of the present systems and methods will also focus nearly exclusively upon the user experience within a retailer's website. This is intentional in order to provide a clear use case and brevity to the disclosure; however, it should be noted that the present systems and methods apply equally well to any situation where a user experience in any online platform is being studied. As such, the focus herein on a retail setting is in no way intended to artificially limit the scope of this disclosure.

In the following it is understood that the term 'usability' refers to a metric scoring value for judging the ease of use of a target web site. A 'client' refers to a sponsor who initiates and/or finances the user experience study. The client may be, for example, a marketing manager who seeks to test the user experience of a commercial web site for marketing (selling or advertising) certain products or services. 'Participants' may be a selected group of people who participate in the user experience study and may be screened based on a predetermined set of questions. 'UX researcher' or 'UX designer' refers to an individual generating or collecting information on user experience via a study. A 'Project manager' or 'Marketing Manager' are generally client employees tasked with determining the user experience of a product or website. These individuals may author a study directly or leverage a UX researcher to author a user experience study. 'Remote user experience testing' or 'remote user experience study' refers to testing or study in accordance with which participants (referred to use their computers, mobile devices or otherwise) access a target web site in order to provide feedback about the web site's ease of use, connection speed, and the level of satisfaction the participant experiences in using the web site. 'Unmoderated user experience testing' refers to communication with test participants without a moderator (e.g., a software, hardware, or a combined software/hardware system can automatically gather the participants' feedback and records their responses). The system can test a target web site by asking participants to view the web site, perform test tasks, and answer questions associated with the tasks.

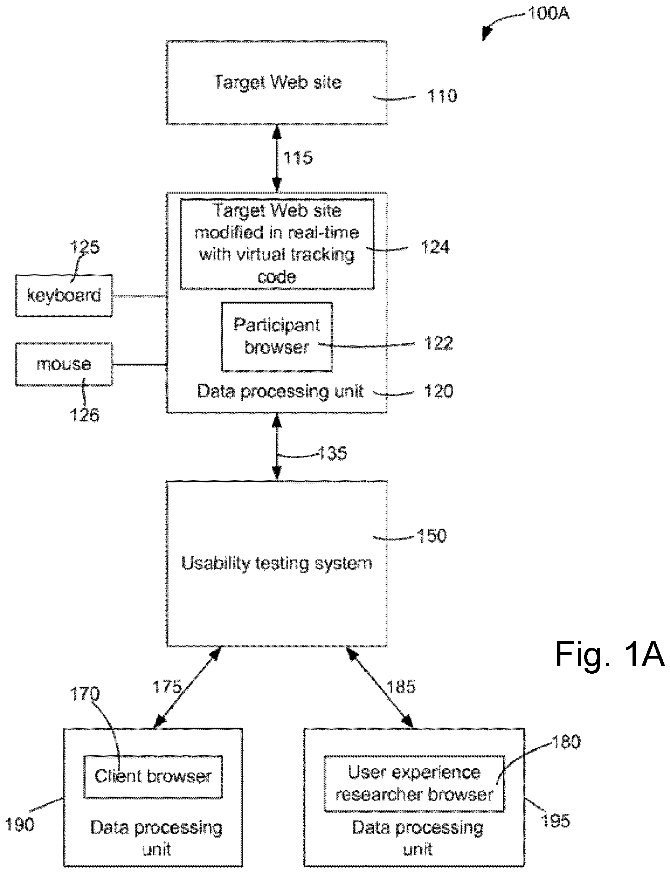

To facilitate the discussion, Figure 1A is a simplified block diagram of a user testing platform 100A according to an embodiment. Platform 100A is adapted to test a target web site 110. Platform 100A is shown as including a user experience testing system 150 that is in communications with data processing units 120, 190 and 195. Data processing units 120, 190 and 195 may be a personal computer equipped with a monitor, a handheld device such as a tablet PC, an electronic notebook, a wearable device such as a cell phone, or a smart phone.

Data processing unit 120 includes a browser 122 that enables a user (e.g., user experience test participant) using the data processing unit 120 to access target web site 110. Data processing unit 120 includes, in part, an input device such as a keyboard 125 or a mouse 126, and a participant browser 122. In one embodiment, data processing unit 120 may insert a virtual tracking code to target web site 110 in real-time while the target web site is being downloaded to the data processing unit 120. The virtual tracking code may be a proprietary JavaScript code, whereby the run-time data processing unit interprets the code for execution. In other embodiments, browser native APIs may be leveraged to collect data regarding the participant's sessions. In some embodiments, the browser native APIs and the virtual tracking code may be leveraged in combination to collect a full suite of information regarding the participant's activity. The tracking code collects participants' activities on the downloaded web page such as the number of clicks, keystrokes, keywords, scrolls, time on tasks, and the like over a period of time. Data processing unit 120 simulates the operations performed by the tracking code and is in communication with user experience testing system 150 via a communication link 135. Communication link 135 may include a local area network, a metropolitan area network, and a wide area network. Such a communication link may be established through a physical wire or wirelessly. For example, the communication link may be established using an Internet protocol such as the TCP/IP protocol.

Activities of the participants associated with target web site 110 are collected and sent to user experience testing system 150 via communication link 135. In one embodiment, data processing unit 120 may instruct a participant to perform predefined tasks on the downloaded web site during a user experience test session, in which the participant evaluates the web site based on a series of user experience tests. The virtual tracking code (e.g., a proprietary JavaScript) may record the participant's responses (such as the number of mouse clicks) and the time spent in performing the predefined tasks. Screenshots, video and/or audio recordings, interactions with a specific interface, and touch data may also be collected based upon the study criteria. The user experience testing may also include gathering performance data of the target web site such as the ease of use, the connection speed, the satisfaction of the user experience. Because the web page is not modified on the original web site, but on the downloaded version in the participant data processing unit, the user experience can be tested on any web sites including competitions' web sites.

Data collected by data processing unit 120 may be sent to the user experience testing system 150 via communication link 135. In an embodiment, user experience testing system 150 is further accessible by a client via a client browser 170 running on data processing unit 190. User experience testing system 150 is further accessible by user experience researcher browser 180 running on data processing unit 195. Client browser 170 is shown as being in communications with user experience testing system 150 via communication link 175. User experience research browser 180 is shown as being in communications with user experience testing system 150 via communications link 185. A client and/or user experience researcher may design one or more sets of questionnaires for screening participants and for testing the user experience of a web site. User experience testing system 150 is described in detail below.

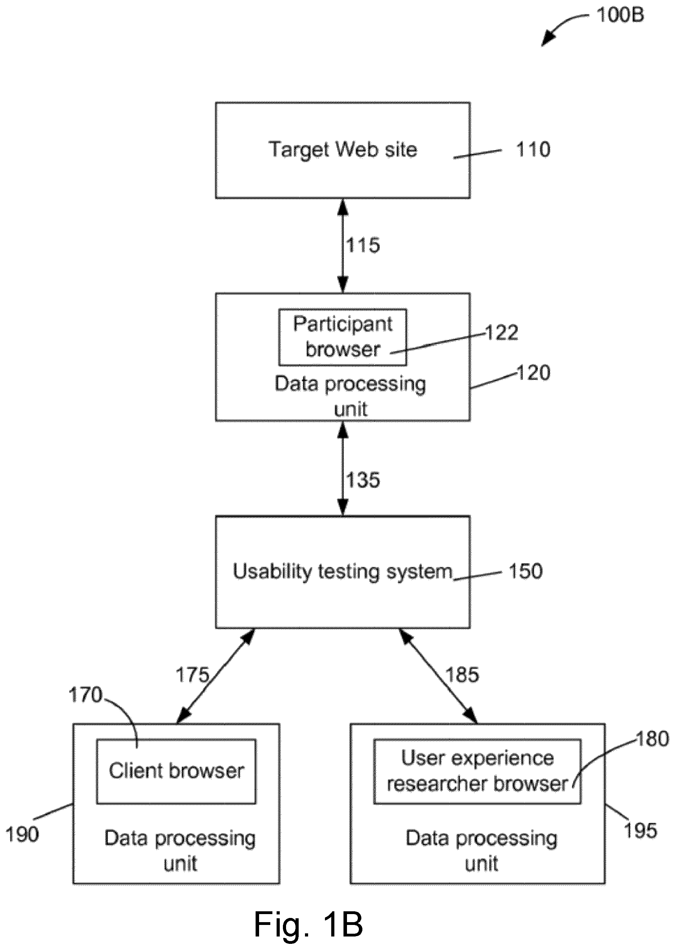

Figure 1B is a simplified block diagram of a user testing platform100B according to another embodiment of the present invention. Platform 100B is shown as including a target web site 110 being tested by one or more participants using a standard web browser 122 running on data processing unit 120 equipped with a display. Participants may communicate with a user experience test system 150 via a communication link 135. User experience test system 150 may communicate with a client browser 170 running on a data processing unit 190. Likewise, user experience test system 150 may communicate with user experience researcher browser running on data processing unit 195. Although a data processing unit is illustrated, one of skill in the art will appreciate that data processing unit 120 may include a configuration of multiple single-core or multi-core processors configured to process instructions, collect user experience test data (e.g., number of clicks, mouse movements, time spent on each web page, connection speed, and the like), store and transmit the collected data to the user experience testing system, and display graphical information to a participant via an input/output device (not shown).

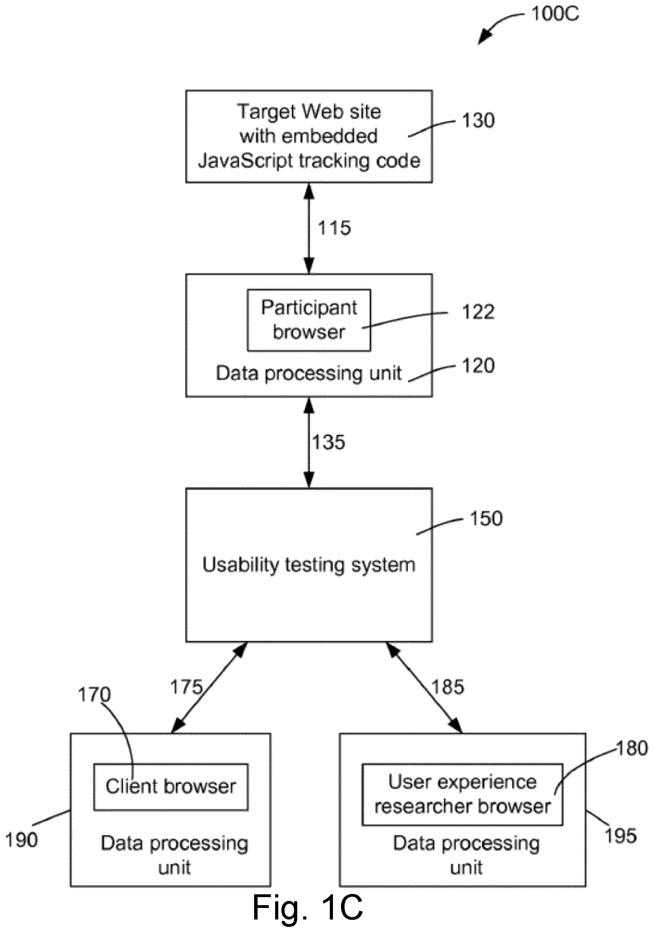

Figure 1C is a simplified block diagram of a user testing platform 100C according to yet another embodiment of the present invention. Platform 100C is shown as including a target web site 130 being tested by one or more participants using a standard web browser 122 running on data processing unit 120 having a display. The target web site 130 is shown as including a tracking program code configured to track actions and responses of participants and send the tracked actions/responses back to the participant's data processing unit 120 through a communication link 115. Communication link 115 may be computer network, a virtual private network, a local area network, a metropolitan area network, a wide area network, and the like. In one embodiment, the tracking program is a JavaScript configured to run tasks related to user experience testing and sending the test/study results back to participant's data processing unit for display. Such embodiments advantageously enable clients using client browser 170 as well as user experience researchers using user experience research browser 180 to design mockups or prototypes for user experience testing of variety of web site layouts. Data processing unit 120 may collect data associated with the user experience of the target web site and send the collected data to the user experience testing system 150 via a communication link 135.

In one exemplary embodiment, the testing of the target web site (page) may provide data such as ease of access through the Internet, its attractiveness, ease of navigation, the speed with which it enables a user to complete a transaction, and the like. In another exemplary embodiment, the testing of the target web site provides data such as duration of usage, the number of keystrokes, the user's profile, and the like. It is understood that testing of a web site in accordance with embodiments of the present invention can provide other data and user experience metrics. Information collected by the participant's data processing unit is uploaded to user experience testing system 150 via communication link 135 for storage and analysis.

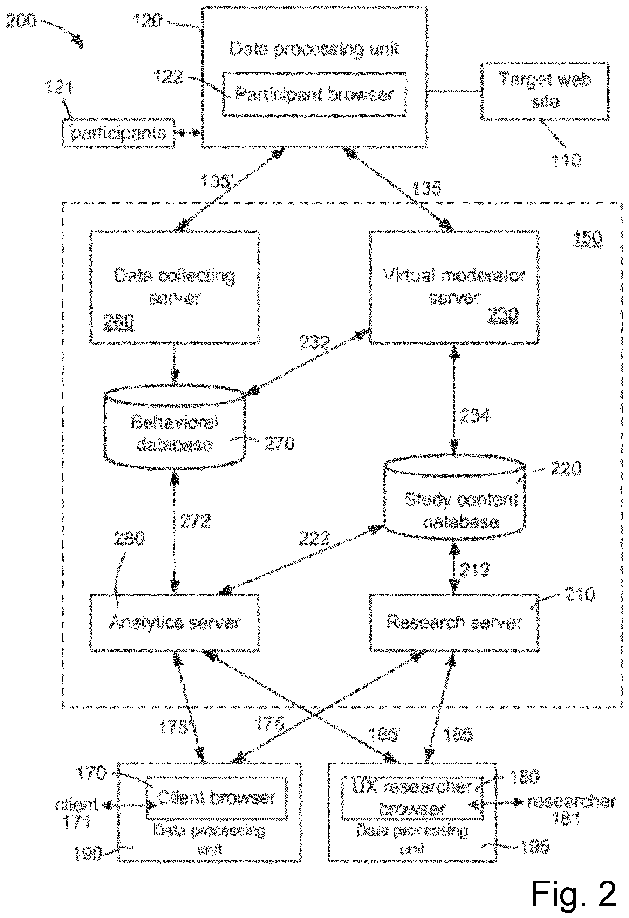

Figure 2 is a simplified block diagram of an exemplary embodiment platform 200 according to one embodiment of the present invention. Platform 200 is shown as including, in part, a user experience testing system 150 being in communications with a data processing unit 125 via communications links 135 and 135'. Data processing unit 125 includes, in part, a participant browser 120 that enables a participant to access a target web site 110. Data processing unit 125 may be a personal computer, a handheld device, such as a cell phone, a smart phone or a tablet PC, or an electronic notebook. Data processing unit 125 may receive instructions and program codes from user experience testing system 150 and display predefined tasks to participants 120. The instructions and program codes may include a web-based application that instructs participant browser 122 to access the target web site 110. In one embodiment, a tracking code is inserted to the target web site 110 that is being downloaded to data processing unit 125. The tracking code may be a JavaScript code that collects participants' activities on the downloaded target web site such as the number of clicks, keystrokes, movements of the mouse, keywords, scrolls, time on tasks and the like performed over a period of time.

Data processing unit 125 may send the collected data to user experience testing system 150 via communication link 135' which may be a local area network, a metropolitan area network, a wide area network, and the like and enable user experience testing system 150 to establish communication with data processing unit 125 through a physical wire or wirelessly using a packet data protocol such as the TCP/IP protocol or a proprietary communication protocol.

User experience testing system 150 includes a virtual moderator software module running on a virtual moderator server 230 that conducts interactive user experience testing with a user experience test participant via data processing unit 125 and a research module running on a research server 210 that may be connected to a user research experience data processing unit 195. User experience researcher 181 may create tasks relevant to the user experience study of a target web site and provide the created tasks to the research server 210 via a communication link 185. One of the tasks may be a set of questions designed to classify participants into different categories or to prescreen participants. Another task may be, for example, a set of questions to rate the user experience of a target web site based on certain metrics such as ease of navigating the web site, connection speed, layout of the web page, ease of finding the products (e.g., the organization of product indexes). Yet another task may be a survey asking participants to press a "yes" or "no" button or write short comments about participants' experiences or familiarity with certain products and their satisfaction with the products. All these tasks can be stored in a study content database 220, which can be retrieved by the virtual moderator module running on virtual moderator server 230 to forward to participants 120. Research module running on research server 210 can also be accessed by a client (e.g., a sponsor of the user experience test) 171 who, like user experience researchers 181, can design her own questionnaires since the client has a personal interest to the target web site under study. Client 171 can work together with user experience researchers 181 to create tasks for user experience testing. In an embodiment, client 171 can modify tasks or lists of questions stored in the study content database 220. In another embodiment, client 171 can add or delete tasks or questionnaires in the study content database 220. In yet another embodiment, client 171 may be user experience researcher 181.

In some embodiment, one of the tasks may be open or closed card sorting studies for optimizing the architecture and layout of the target web site. Card sorting is a technique that shows how online users organize content in their own mind. In an open card sort, participants create their own names for the categories. In a closed card sort, participants are provided with a predetermined set of category names. Client 171 and/or user experience researcher 181 can create proprietary online card sorting tool that executes card sorting exercises over large groups of participants in a rapid and cost-effective manner. In an embodiment, the card sorting exercises may include up to 100 items to sort and up to 12 categories to group. One of the tasks may include categorization criteria such as asking participants questions "why do you group these items like this?". Research module on research server 210 may combine card sorting exercises and online questionnaire tools for detailed taxonomy analysis. In an embodiment, the card sorting studies are compatible with SPSS applications.

In an embodiment, the card sorting studies can be assigned randomly to participant 120. User experience (UX) researcher 181 and/or client 171 may decide how many of those card sorting studies each participant is required to complete. For example, user experience researcher 181 may create a card sorting study within 12 tasks, group them in 4 groups of 3 tasks and manage that each participant just has to complete one task of each group.

After presenting the thus created tasks to participants 120 through virtual moderator module (running on virtual moderator server 230) and communication link 135, the actions/responses of participants will be collected in a data collecting module running on a data collecting server 260 via a communication link 135'. In an embodiment, communication link 135' may be a distributed computer network and share the same physical connection as communication link 135. This is, for example, the case where data collecting module 260 locates physically close to virtual moderator module 230, or if they share the user experience testing system's processing hardware. In the following description, software modules running on associated hardware platforms will have the same reference numerals as their associated hardware platform. For example, virtual moderator module will be assigned the same reference numeral as the virtual moderator server 230, and likewise data collecting module will have the same reference numeral as the data collecting server 260.

Data collecting module 260 may include a sample quality control module that screens and validates the received responses, and eliminates participants who provide incorrect responses, or do not belong to a predetermined profile, or do not qualify for the study. Data collecting module 260 may include a "binning" module that is configured to classify the validated responses and stores them into corresponding categories in a behavioral database 270.

Merely as an example, responses may include gathered web site interaction events such as clicks, keywords, URLs, scrolls, time on task, navigation to other web pages, and the like. In one embodiment, virtual moderator server 230 has access to behavioral database 270 and uses the content of the behavioral database to interactively interface with participants 120. Based on data stored in the behavioral database, virtual moderator server 230 may direct participants to other pages of the target web site and further collect their interaction inputs in order to improve the quantity and quality of the collected data and also encourage participants' engagement. In one embodiment, virtual moderator server may eliminate one or more participants based on data collected in the behavioral database. This is the case if the one or more participants provide inputs that fail to meet a predetermined profile.

User experience testing system 150 further includes an analytics module 280 that is configured to provide analytics and reporting to queries coming from client 171 or user experience (UX) researcher 181. In an embodiment, analytics module 280 is running on a dedicated analytics server that offloads data processing tasks from traditional servers. Analytics server 280 is purpose-built for analytics and reporting and can run queries from client 171 and/or user experience researcher 181 much faster (e.g., 100 times faster) than conventional server system, regardless of the number of clients making queries or the complexity of queries. The purpose- built analytics server 280 is designed for rapid query processing and ad hoc analytics and can deliver higher performance at lower cost, and, thus provides a competitive advantage in the field of user experience testing and reporting and allows a company such as UserZoom (or Xperience Consulting, SL) to get a jump start on its competitors.

In an embodiment, research module 210, virtual moderator module 230, data collecting module 260, and analytics server 280 are operated in respective dedicated servers to provide higher performance. Client (sponsor) 171 and/or user experience research 181 may receive user experience test reports by accessing analytics server 280 via respective links 175' and/or 185 '. Analytics server 280 may communicate with behavioral database via a two-way communication link 272.

In an embodiment, study content database 220 may include a hard disk storage or a disk array that is accessed via iSCSI or Fiber Channel over a storage area network. In an embodiment, the study content is provided to analytics server 280 via a link 222 so that analytics server 280 can retrieve the study content such as task descriptions, question texts, related answer texts, products by category, and the like, and generate together with the content of the behavioral database 270 comprehensive reports to client 171 and/or user experience researcher 181.

Shown in Figure 2 is a connection 232 between virtual moderator server 230 and behavioral database 270. Behavioral database 270 can be a network attached storage server or a storage area network disk array that includes a two-way communication via link 232 with virtual moderator server 230. Behavioral database 270 is operative to support virtual moderator server 230 during the user experience testing session. For example, some questions or tasks are interactively presented to the participants based on data collected. It would be advantageous to the user experience researcher to set up specific questions that enhance the user experience testing if participants behave a certain way. If a participant decides to go to a certain web page during the study, the virtual moderator server 230 will pop up corresponding questions related to that page; and answers related to that page will be received and screened by data collecting server 260 and categorized in behavioral database server 270. In some embodiments, virtual moderator server 230 operates together with data stored in the behavioral database to proceed the next steps. Virtual moderator server, for example, may need to know whether a participant has successfully completed a task, or based on the data gathered in behavioral database 270, present another tasks to the participant.

Referring still to Figure 2, client 171 and user experience researcher 181 may provide one or more sets of questions associated with a target web site to research server 210 via respective communication link 175 and 185. Research server 210 stores the provided sets of questions in a study content database 220 that may include a mass storage device, a hard disk storage or a disk array being in communication with research server 210 through a two-way interconnection link 212. The study content database may interface with virtual moderator server 230 through a communication link 234 and provides one or more sets of questions to participants via virtual moderator server 230. Participant communication and recruitment may involve push notifications, SMS messaging and postings to social media networks as well.

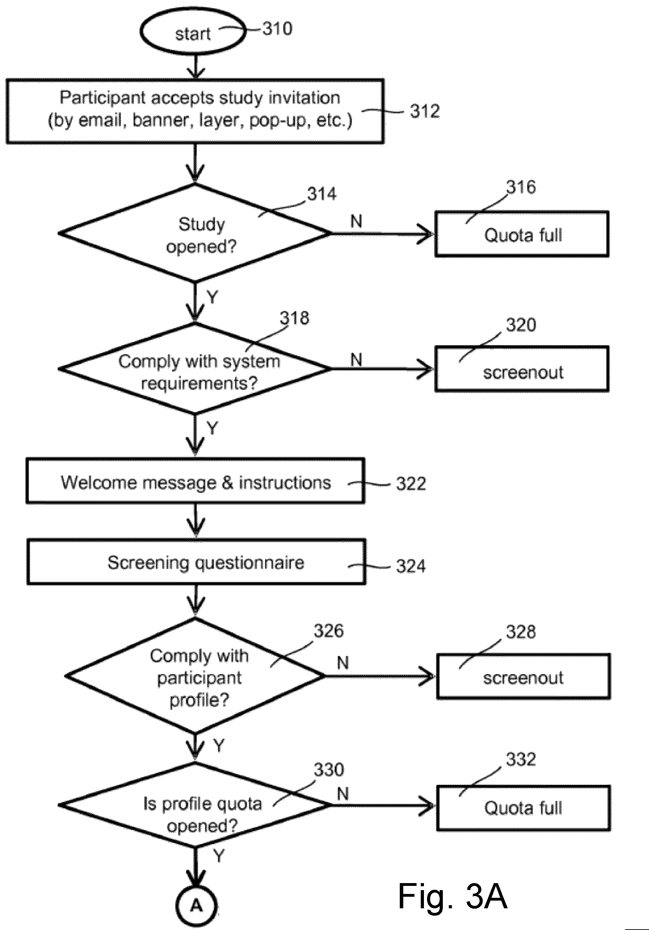

Figure 3A is a flow diagram of an exemplary process of interfacing with potential candidates and prescreening participants for the user experience testing according to one embodiment of the present invention. The process starts at step 310. Initially, potential candidates for the user experience testing may be recruited by email, advertisement banners, pop-ups, text layers, overlays, and the like (step 312). The number of candidates who have accepted the invitation to the user experience test will be determined at step 314. If the number of candidates reaches a predetermined target number, then other candidates who have signed up late may be prompted with a message thanking for their interest and that they may be considered for a future survey (shown as "quota full" in step 316). At step 318, the user experience testing system further determines whether the participants' browser comply with a target web site browser, and whether the device, operating system, and peripherals meet the study requirements (e.g., a webcam of sufficient quality or a touch enabled device, for example). For example, user experience researchers or the client may want to study and measure a web site's user experience with regard to a specific web browser (e.g., Microsoft Edge) and reject all other browsers. Or in other cases, only the user experience data of a web site related to Opera or Chrome will be collected, and Microsoft Edge or FireFox will be rejected at step 320. At step 322, participants will be prompted with a welcome message and instructions are presented to participants that, for example, explain how the user experience testing will be performed, the rules to be followed, and the expected duration of the test, and the like. At step 324, one or more sets of screening questions may be presented to collect profile information of the participants. Questions may relate to participants' experience with certain products, their awareness with certain brand names, their gender, age, education level, income, online buying habits, and the like. At step 326, the system further eliminates participants based on the collected information data. For example, only participants who have used the products under study will be accepted or screened out (step 328). At step 330, a quota for participants having a target profile will be determined. For example, half of the participants must be female, and they must have online purchase experience or have purchased products online in recent years.

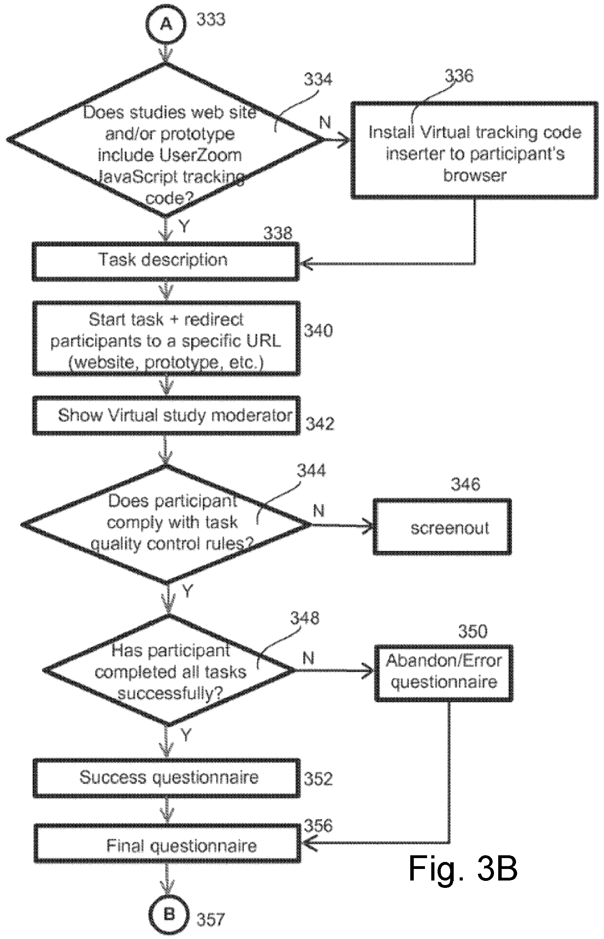

Figure 3B is a flow diagram of an exemplary process for gathering user experience data of a target web site according to an embodiment of the present invention. At step 334, the target web site under test will be verified whether it includes a proprietary tracking code. In an embodiment, the tracking code is a UserZoom JavaScript code that pop-ups a series of tasks to the pre-screened participants. In other embodiments, browser native APIs may be leveraged to track participant activity (alone or in combination with the virtual tracking code). If the web site under study includes a proprietary tracking code (this corresponds to the scenario shown in Figure 1C), then the process proceeds to step 338. Otherwise, a virtual tracking code will be inserted to participants' browser at step 336. This corresponds to the scenario described above in Figure 1A.

The following process flow is best understood together with Figure 2. At step 338, a task is described to participants. The task can be, for example, to ask participants to locate a color printer below a given price. At step 340, the task may redirect participants to a specific web site such as eBay, HP, or Amazon.com. The progress of each participant in performing the task is monitored by a virtual study moderator at step 342. At step 344, responses associated with the task are collected and verified against the task quality control rules. The step 344 may be performed by the data collecting module 260 described above and shown in Figure 2. Data collecting module 260 ensures the quality of the received responses before storing them in a behavioral database 270 (Figure 2). Behavioral database 270 may include data that the client and/or user experience researcher want to determine such as how many web pages a participant viewed before selecting a product, how long it took the participant to select the product and complete the purchase, how many mouse clicks and text entries were required to complete the purchase and the like. A number of participants may be screened out (step 346) during step 344 for non-complying with the task quality control rules and/or the number of participants may be required to go over a series of training provided by the virtual moderator module 230. At step 348, virtual moderator module 230 determines whether or not participants have completed all tasks successfully. If all tasks are completed successfully (e.g., participants were able to find a web page that contains the color printer under the given price), virtual moderator module 230 will prompt a success questionnaire to participants at step 352. If not, then virtual moderator module 230 will prompt an abandon or error questionnaire to participants who did not complete all tasks successfully to find out the causes that lead to the incompletion. Whether participants have completed all task successfully or not, they will be prompted a final questionnaire at step 356.

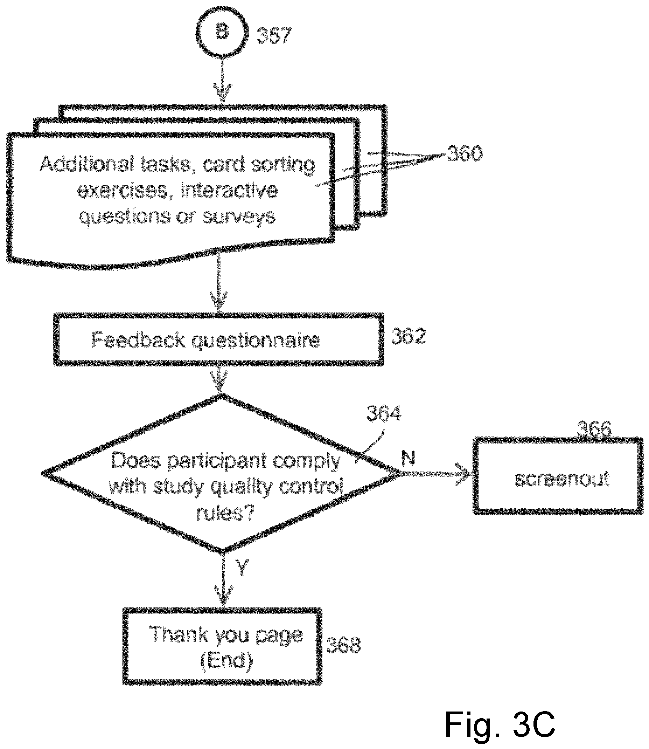

Figure 3C is a flow diagram of an exemplary process for card sorting studies according to one embodiment of the present invention. At step 360, participants may be prompted with additional tasks such as card sorting exercises. Card sorting is a powerful technique for assessing how participants or visitors of a target web site group related concepts together based on the degree of similarity or a number of shared characteristics. Card sorting exercises may be time consuming. In an embodiment, participants will not be prompted all tasks but only a random number of tasks for the card sorting exercise. For example, a card sorting study is created within 12 tasks that is grouped in 6 groups of 2 tasks. Each participant just needs to complete one task of each group. It should be appreciated to one person of skill in the art that many variations, modifications, and alternatives are possible to randomize the card sorting exercise to save time and cost. Once the card sorting exercises are completed, participants are prompted with a questionnaire for feedback at step 362. The feedback questionnaire may include one or more survey questions such as a subjective rating of target web site attractiveness, how easy the product can be used, features that participants like or dislike, whether participants would recommend the products to others, and the like. At step 364, the results of the card sorting exercises will be analyzed against a set of quality control rules, and the qualified results will be stored in the behavioral database 270. In an embodiment, the analyze of the result of the card sorting exercise is performed by a dedicated analytics server 280 that provides much higher performance than general-purpose servers to provide higher satisfaction to clients. If participants complete all tasks successfully, then the process proceeds to step 368, where all participants will be thanked for their time and/or any reward may be paid out. Else, if participants do not comply or cannot complete the tasks successfully, the process proceeds to step 366 that eliminates the non-compliant participants.

Another user experience test that is commonly performed is a 'click test' study. In such a study the participant is provided a task or a prompt. The location and timing of the participant's mouse clicks are recorded by the system. In some embodiments, the click test may be particularly helpful when analyzing prototypes of a user experience. For example, on a mock-up of a webpage, the participant may be prompted to select the button for purchasing a specific sweater. The location of the participant's mouse selection is recorded and may be aggregated with other participants' results. This may be utilized to generate heatmaps and other such analytics regarding where participants thought it was appropriate to select.

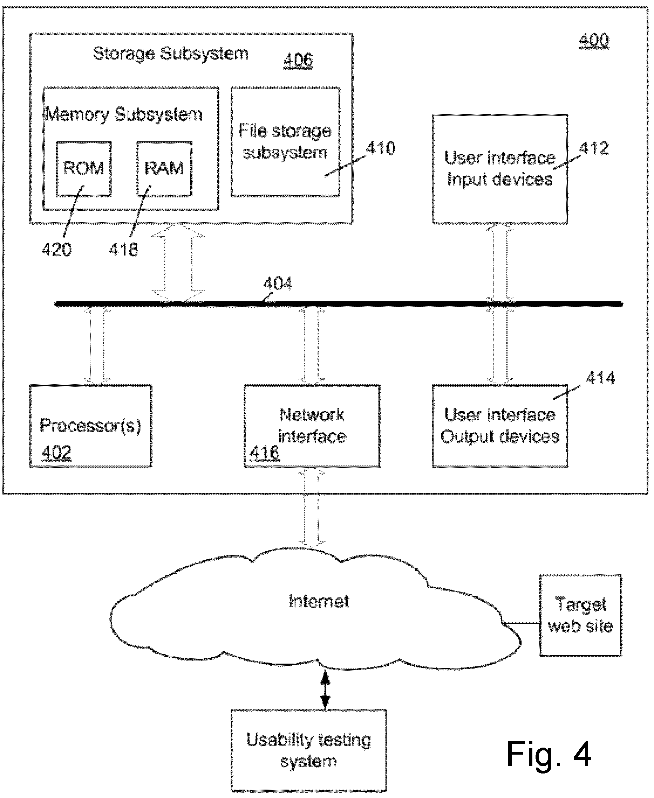

Figure 4 illustrates an example of a suitable data processing unit 400 configured to connect to a target web site, display web pages, gather participant's responses related to the displayed web pages, interface with a user experience testing system, and perform other tasks according to an embodiment of the present invention. System 400 is shown as including at least one processor 402, which communicates with a number of peripheral devices via a bus subsystem 404. These peripheral devices may include a storage subsystem 406, including, in part, a memory subsystem 408 and a file storage subsystem 410, user interface input devices 412, user interface output devices 414, and a network interface subsystem 416 that may include a wireless communication port. The input and output devices allow user interaction with data processing system 402. Bus system 404 may be any of a variety of bus architectures such as ISA bus, VESA bus, PCI bus and others. Bus subsystem 404 provides a mechanism for enabling the various components and subsystems of the processing device to communicate with each other. Although bus subsystem 404 is shown schematically as a single bus, alternative embodiments of the bus subsystem may utilize multiple busses.

User interface input devices 412 may include a keyboard, pointing devices such as a mouse, trackball, touchpad, or graphics tablet, a scanner, a barcode scanner, a touch screen incorporated into the display, audio input devices such as voice recognition systems, microphones, and other types of input devices. In general, use of the term input device is intended to include all possible types of devices and ways to input information to processing device. User interface output devices 414 may include a display subsystem, a printer, a fax machine, or non-visual displays such as audio output devices. The display subsystem may be a cathode ray tube (CRT), a flat-panel device such as a liquid crystal display (LCD), or a projection device. In general, use of the term output device is intended to include all possible types of devices and ways to output information from the processing device.

Storage subsystem 406 may be configured to store the basic programming and data constructs that provide the functionality in accordance with embodiments of the present invention. For example, according to one embodiment of the present invention, software modules implementing the functionality of the present invention may be stored in storage subsystem 406. These software modules may be executed by processor(s) 402. Such software modules can include codes configured to access a target web site, codes configured to modify a downloaded copy of the target web site by inserting a tracking code, codes configured to display a list of predefined tasks to a participant, codes configured to gather participant's responses, and codes configured to cause participant to participate in card sorting exercises. Storage subsystem 406 may also include codes configured to transmit participant's responses to a user experience testing system.

Memory subsystem 408 may include a number of memories including a main random-access memory (RAM) 418 for storage of instructions and data during program execution and a read only memory (ROM) 420 in which fixed instructions are stored. File storage subsystem 410 provides persistent (non-volatile) storage for program and data files, and may include a hard disk drive, a floppy disk drive along with associated removable media, a Compact Disk Read Only Memory (CD-ROM) drive, an optical drive, removable media cartridges, and other like storage media.

Figures 1A-2 present a set of generalized systems and platforms for UX studies, and Figures 3A-C have provided generalized methods of performing a UX study. Figure 4 provides exemplary systems and hardware capable of completing some of the tasks associated with the usability study. Now, attention will be shifted to specific systems and methods for UX studies that are specifically designed for robust and in-depth artificial intelligence (AI) interventions and analysis. The tasks associated with these studies may be similar to the tasks previously discussed (click-test, card sorting, survey question answers, finding a given product or service, etc.). However, the results that are intended to be analyzed, and the manner in which tasks are deployed, and participants managed, are more narrowly tailored for effective AI involvement.

For example, task and participant management may be responsive to AI recommendations (as opposed to the heuristic and static methodologies discussed previously). Analytics, in particular, benefit from AI interventions. However, to maximize the AI analysis utility, results that are collected for the purpose of AI analysis are more tailored/limited. This does not mean that a wide variety of study results cannot be collected, it just means the particular results that are subject to AI analytics generally fall into one of two categories. The first category is free text inputs that are responsive to a question that is posed to the participant, and the second data type analyzed is video and/or audio recordings of the user engaged in a study.

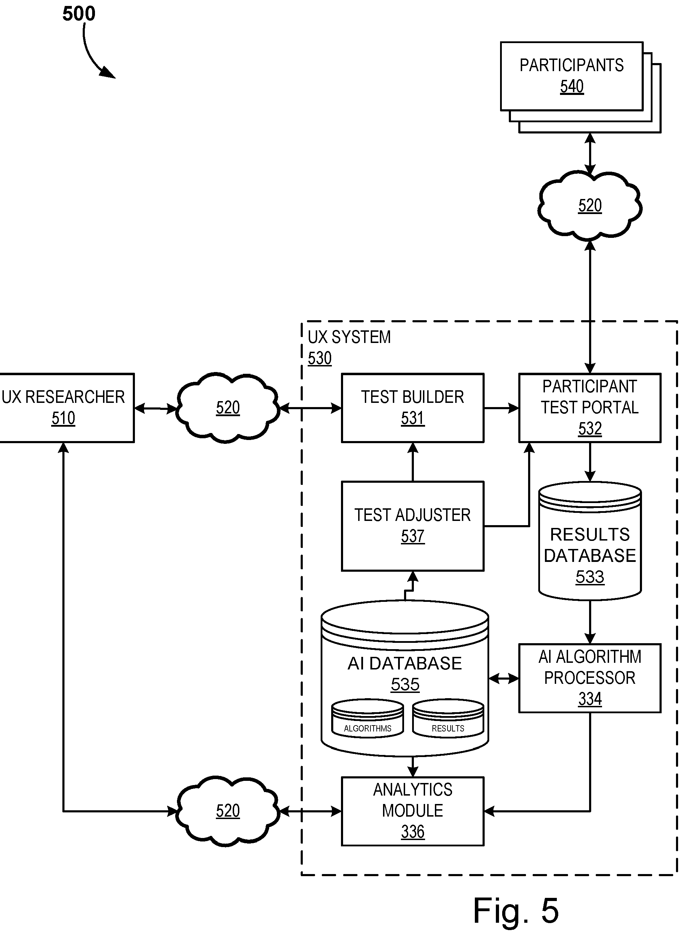

Figure 5 provides an ecosystem 500 for the user experience in this particular AI-driven arrangement. As with other systems outlined, some basic components are maintained- firstly a client or UX researcher 530 is able to access the UX system 530 via one or more communication channel 520. The UX researcher 510 may access the UX system 510 from a processor device, such as a PC laptop, mobile device, or the like. The communication channel 520 may include virtually any wired or wireless network, including a local area network (LAN), a wide area network (WAN), the internet, a cellular network, or some combination thereof.

Likewise, a set of participants 540 may likewise access the UX system 530 via the communication channel 520. The participants 540 may be selected as will be discussed in greater below, leveraging one or more heuristics and AI selection methodologies. The participants 540 may access the system using a suitable device. These devices may be virtually any electronic device, but generally is a personal computer (e.g., laptop or desktop) or via a mobile device, such as a smartphone. Generally, the device requires the ability to either input text, or record either video, audio, or both. Video/audio recording may take place using an external webcam and microphone, or the integrated camera and microphone in the device.

Generally, the UX researcher 510 accesses a test builder 531 of the UX system in order to generate a set of tasks. These tasks are compiled using a test builder tool 521. The test builder 531 may additionally consume recommendations made by downstream AI systems to modify the tasks, and even generate entirely new tasks. The tasks are then provided to a participant test portal 532, which also enables the participants 540 to access the UX system 530. The participant test portal 532 collects the results from the study, including any click flows, click locations, inputted text, audio and/or video recordings, and the like. Rather than utilizing a script that is embedded in the participant's browser, the presently disclosed system typically launches an application which enables the capture of the data at the participant's device. Alternatively, the application operating via a browser or locally loaded upon the participant's device may push the pertinent data to the UX system 530 for capture.

Similarly, to the test builder 531 module, the participant test portal 532 may receive and implement recommendations from the test and participant adjuster module 337. These recommendations may be implemented in a current study in real-time or may be implemented in the manner in which later participants are selected or fielded. Details of the test adjuster module 537, and the AI analytics that drive the recommendations that it provides, will be discussed in greater detail below.

All collected data from each participant 540 is collected and stored in the results database 533. These results are not static- in response to different downstream analysis, the data may be aggregated or otherwise collated in different segments to provide different corpuses of results. These different collections may provide various specific insights in a parsed and more granular manner. For example, for a given brand, the UX researcher may wish to focus upon the brand appeal for a given demographic (e.g., African American women, for example). The system could be instructed, through the use of heuristics and AI selection, to simply filter participants involved in the study to such a demographic. However, in this example situation, the UX researcher may gain particular insight by comparing the target demographic against the general sentiment for, say, all women. As such, the participant selection would focus on ensuring there are sufficient quantities of the target demographic to provide statistically significant (measured by a p-value, confidence interval against a threshold, or other known statistical analysis for determining sample sizes) and then fleshing out the remaining study participants with other demographics of women. In some embodiments, "statistically significant" or "substantially similar" may be based upon a calculated z-score and standard deviation of the various data inputs and using these values computing a margin of error. This margin of error may be computed as a percentage of the absolute score and then compared against a threshold (e.g., 80, 90 or 95%). Other techniques, such as relying upon a confidence interval, or merely a standard deviation, may likewise be utilized. On the analysis side, however, the system may enable filtering by the results by the different demographics, or otherwise generating data sets in the results database 533 for streamlined analysis. Similarly, if data is found to be of low quality, unnecessary, or otherwise defective, the system may periodically cleanse the results database 533 of such records.

A core element of the UX system 530 includes an AI algorithm processor system 534. This AI system 534 leverages AI algorithms which are generated, trained, utilized and updated by the system 534 over time. These AI algorithms are stored within an AI database 535. The AI database 535, notably, also stores automatic video clip information, speech-to-text transcriptions, sentiment analysis data, and other AI analysis data (which will be disclosed in greater detail below). The AI Algorithm processor 534 consumes the data (or a subset of the data intended for AI analysis) maintained within the results database 533, and performs particular quality checking, transformations, and ultimately insight generation. These AI processing steps will be disclosed in significant detail in relation to other figures below.

The results of the AI algorithm processor 534 may likewise be stored in the results AI database 535 as noted previously, or another insights database (not illustrated) for easy retrieval. The analytics module 536 directly receives the data from the AI algorithm processor 534, or via the AI database 535 or an insights database (not illustrated), or a combination thereof. The analytics module 536 likewise may consume AL algorithms to assist in the selection, management and presentation of the results and insights. Again, the UX researcher 510 may access these outputs from the analytics module 536 via the communication channel 520.

Earlier, the test adjuster module 537 was touched upon as providing recommendations to the test builder 531 and the participant test portal 532 in order to modify/generate new tasks, and alter participant 540 engagement, respectively, into the UX system 530. The test adjuster module 537 leverages AI algorithms for the determination of which topics are "important" in the results and may then compare these topics against the tasks already deployed. When there is a good match in tasks, these tasks may be given more weight in the fielding process such that more data of the desired kind is collected. When tasks are not well situated to address the data that needs to be collected, the system may independently generate a task oriented toward collecting information regarding the given topic, or when this is not within the system's capacity, may suggest to the UX researcher 510 that there is an opportunity to collect missing data of import, thereby allowing the UX researcher 510 to generate a new task.

Further, the test adjuster module 537 may use AI modeling to on-the-fly identify quality issues with a given participant, and thus alter the tasks for the given participant (or prematurely terminate the study with the given participant) or make more systematic changes to the participants being selected. These, and other activities of the test adjuster module 537 will be discussed in greater detail below.

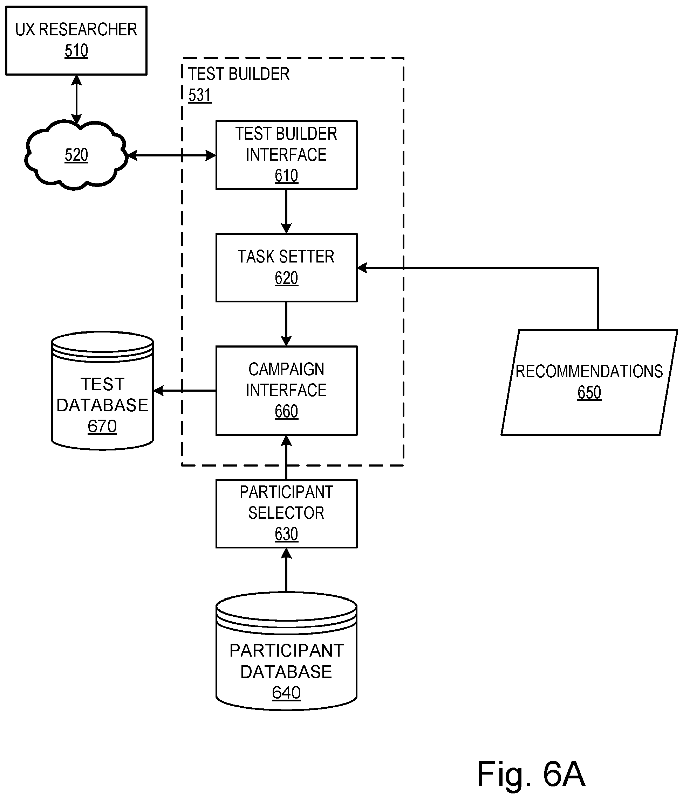

Now that the high-level overview of the UX ecosystem 500 has been completed, attention shall be given to the individual components that make up the UX system 530. Figure 6A provides greater detail into the test builder 531 for example. Again, it can be seen that the UX researcher 510 has the ability to access the test builder 531 through the communication channel 520 via a test builder interface 610. The test builder interface 610 may consist of a graphical user interface (GUI) or similar interface that enables intuitive controls for the UX researcher 520 to generate and manage user experience tests. In some embodiments, the test builder interface 610 is supported through a web browser, but is some other instances, the test builder interface 610 may comprise a native application hosted on the UX researcher's 510 device.

The test builder interface 610 enables the UX researcher 510 to perform several functions. The primary of which is the setting of tasks via a task setter module 620, for a given user experience study. It should be noted that any given study may be comprised of a plurality of tasks. In some instances, the tasks are all mandatory for each participant 540. In other situations, the tasks may be randomly, pseudo-randomly, or deterministically assigned to different participants 540 based upon any number of factors (e.g., certain demographics receive certain tasks, each participant receives a subset of tasks consisting of a particular number of tasks on a randomized basis, etc.).

Task setting generally involves determining the kind of task involved, and in some cases, accessing a template driven wizard to help assist in the generation of the task(s). For example, for a click test, the UX researcher 510 may be asked to input a starting instruction (e.g., find a Cannon laser printer) and a validation criterion (e.g., arrives at any of a set of URLs or clicks a "I give up" button). The UX researcher may also then input 'triggering events' (such as arriving at a URL for a color printer that is not the Cannon brand). These triggering events may be linked to a particular system response, such as presenting the participant 510 a question, new task objective, or the like. This is an example of a click flow test, but any such usability study may be generated in a similar manner. In most cases the usability study will require an introduction, and a validation condition. The specific activities may differ, however, based upon objective or study type.

Each usability study generally includes a series of tasks. For example, if the study is aimed toward the assessment of a website's navigation capabilities, one task may request a participant to locate a first item. Other tasks may require the participants to find other items, or find the items in different ways (e.g., using search tools versus pull down menus). Other tasks may ask the user to comment on the issues they feel exist in site navigation, or comment on how easy navigation guides are to locate. Other tasks may relate to the 'look and feel' of the site's navigation tools (e.g., their location, size, attractiveness, color, etc.). In general, a great number of tasks are generated for each applicable study- more tasks than a single user would be expected to complete.

A task setter 620 is responsible for selecting from the generated tasks, which ones to present to the participants for completion. In some instances, the tasks are merely randomly assigned to different participants. This may be especially true when the study has just started and there is little data yet collected. In some situations, the selection of which tasks to present is pseudo-random. For example, in the above example for a navigation study, the participant may become bored if she were to be presented with task after task of identifying the location of different products (especially if the products are similar in some manner). In such situations, the tasks may be clustered by 'type', and a participant never receives more than a certain number of tasks from any given type. In yet other embodiments, task selection by the task setter 620 may be deterministic based upon traits of the participant, study requirements, or some other metric. For example, a task A may be linked with task B, and anytime task A is assigned to a participant (even randomly) then task B is likewise assigned. In another example, whenever a participant includes the feature N in their profile, then task M is selected for them. In yet another example, task X is tested at a given rate, and task Y is deployed at a lower rate. Task selection is such a deterministic manner may require coordination with the participant selector 630 in some embodiments. Such coordination can ensure that tasks are properly provided to a given participant, when such a matching is desired. For example, suppose a task is considered more important than other tasks in the study. Also, as will be discussed in greater detail below, it is known which participants are of a higher quality and/or possess a desired trait. The system may wish to match participants with a higher quality score to tasks that are deemed most crucial to the study objective. Here coordination between participant selector 630 and the task setter 620 is critical.

The participant selector 630 chooses which participants to select and field in a given study. As with task selection, this may be as simple as a randomized sampling. However, in more complex systems, the participant selection process, from a pool of participants stored in a participant database 640, is a significantly more complex task. The participant database 640 may include information to the participant selector 630, such as total available participants on their platform, names or other identifiers for their participants, and collected known attributes for their participants. There are a few attributes that are almost universally collected by panel sources. These include participant gender and age, for example. However, other panel sources may collect additional panelist information beyond these most basic attributes. These other collected data points may include marital status, political affiliation, race, household income, interests, location, home ownership status, dietary restrictions/preferences, education levels, number of people in the household, and the like. The system over time is capable of augmenting this dataset with recoded quality metrics and score data for participants, the likelihood of them engaging with specific studies, discovered attributes, and imputed attributes. Discovered attributes include attributes for which the participant provides direct feedback regarding, whereas imputed attributes are predictions of attributed based upon correlation models. These correlation models may be rule driven or may be generated using known machine learning techniques. An example of an imputed attribute such models may generate is that individuals who are known to have an income above $175,000 (known attribute) are likely to be consumers of luxury goods (imputed attribute).

Potential participants are initially filtered to exclude historically ineligible participants. The participant selector 630 then performs complex selection of participants from the participant database 640 based upon participant cost/price, quality, time to field/speed, and availability concerns. This matching step includes considerations for study requirements, be they targetable attributes (known to the system) or non-targetable attributes (attributes which must be estimated for in the participant population).

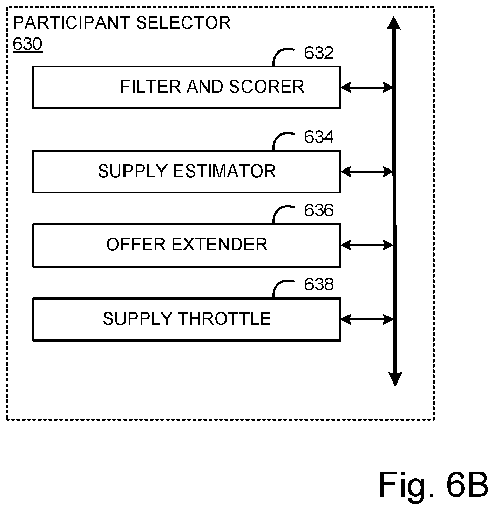

Turning briefly to Figure 6B, an example of the subcomponents that comprise the participant selector 630 are provided. This system may include a repository of preconfigured business rules (not illustrated). These rules may be supplied directly from the UX researcher and/or client or may be generated automatically based upon the contractual obligations existing between the client and the usability testing company. The preconfigured business rules have a significant impact upon how the system selects the participants, speed of participant sourcing, and which criteria may exclude possible participant sub-populations.

In some embodiment, the participant selection server 630 includes sophisticated machine learning (ML) capabilities for the classification of studies, as well as the characterization and selection of participants. A powerful filter and scorer subcomponent 632 engages in determining the user's to be included. Initially, fraudulent participants may be identified by their past performance as part of the filtering. For example, the speed taken by the participant and/or answer patterns may be used to identify participants who are not engaged and are merely filling out studies for the reward. Generally, these participants answer questions too quickly to be actually reading them (a time threshold-based indicator of fraudulent participation), or the answers occur on a regular pattern (repeat pattern or continual selection of the first answer, for example). Another method of fraud detection may rely upon facial recognition to screen out duplicate participants, and to validate sociodemographic data supplied by the participants, such as gender, ethnicity, age, etc. In addition to being useful for fraud detection, facial recognition with known sentiment analysis (in addition to sentiment analysis of audio or text inputs) may be leveraged to collect non-biased feedback when using a product or engaging in the study. This feedback may be deemed a higher quality than participant supplied answers. Other possible pre-study participant monitoring for fraud detection may include checking the device for duplicates (utilizing MAC address for example), detection of bots by response speed or by challenge-response style questions, IP addresses from unsupported countries or the usage of illicit tools on the device.

After fraud filtering, the system may perform filtering of participants by selection criteria set by the UX researcher 510. For example, the study may be focused on women, and as such only female participants may survive the next layer of filtering.

After initial filtering of the participant pool(s), the remaining participants are scored for selection and pruning purposes. Scoring includes clustering of participants, and then based upon model type and geography, the clusters are then sourced, according to suitability identified in the lookup table. Screening questions are applied to participants that have been randomly (or pseudo randomly) selected from the given participant clusters. This system collects all of the known attributes (features) from the participant, and pairs them down to a listing of attributes that are determined to be of interest. In some embodiments, different listings of attributes/features may exist, each listing associated with a different machine learning model. The model(s) are stored within an algorithm database.

Once the attributes/features are identified and collected (and where different ML models are used, the selection of the appropriate model), the features may be converted into scores. Outlying data may be first be removed. Scoring is performed using quantile-based discretization. In quantile-based discretization the underlying feature data is divided up into bins/buckets based upon sample quantiles. In some cases, these buckets are of equal size. The division of the feature data into the buckets maintains the original distribution but utilizes different scales (labels). The bins/buckets adjust to the nature of the data being processed. For example, 1000 values for 10 quantiles would produce a categorical object indicating quantile membership for each data point.

In some embodiments, raw scores are used to generate a single score for each participant for each feature. The raw scores are first normalized before being combined. The singular score is based upon a weighted average of the normalized generated scores for the participant. The weights are collected from the study itself. When there are no scores provided, the system may utilize a default set of mathematical weights (for example, time to completion for a given study type may be weighted higher than the other study types). In some embodiments, the weights are equal, and the scores are combined by a simple average.

In some embodiments, instead of weights (or in addition to the weights) the study may provide mandated thresholds for the given score(s). For example, a study may require that any participant that are engaged completes their qualification within 3 minutes. In this example, participants with a score for time to qualification above the 3-minute mark may be automatically filtered out from the possible pool of participants for the study.

After scoring, the feature scores may be employed to generate clusters for the participant profiles using an unsupervised clustering algorithm. In some embodiments, the five features contemplated herein include 1) time to completion, 2) time to first response, 3) time to qualification, 4) ratio of studies completed, and 5) exclusions (collected from client feedback). This listing is of course non-exhaustive, as other qualities for the participants may also be leveraged by the clustering algorithm. Further, it should be noted, that in some embodiments only a subset of these scores may be utilized in the process for selecting the 'best' participants for a given study. In yet other embodiments, additional metrics may be employed, such as recency, frequency and engagement of the participant. In some embodiments, engagement is a function of time to response in light of the number of studies entered, as well as ratio of studies completed in light of grading feedback from the client. In some embodiments, deep-learning neural networks may be employed to cluster the selected features.

In some embodiments, additional screening questions are given to the various participants. These additional screening questions may be derived from the study requirements that have been directly provided to the system or may be questions that have been derived from the free-text input provided by the study administrators (as outlined above). Regardless of source, these questions may be presented after the participant pool has been selected based upon clusters. However, in some cases, there simply isn't enough feature data available to generate decent (of a confidence above a configured threshold) clusters. In these embodiments, it may be beneficial to ask the participants questions designed to collect the necessary attribute information. When asking for such attribute data, additional screening questions related to the requirements may likewise be asked even though the scoring of the participants has yet to occur (as the participant has been engaged at this stage anyway). Alternatively, the clustering may be supervised as opposed to unsupervised clustering.

The features used by the clustering algorithm are normalized/scored before consumption by the clustering algorithm. In some embodiments, the normalization may convert the raw feature data into a histogram/bucketize the data. The number of buckets the feature values are placed into is highly dependent upon the distribution of the feature values. For example, a prototypical normal distribution may lend itself to five equal sized buckets, whereas a skewed distribution may have fewer buckets. A distribution with two high-frequency peaks may only have two buckets even. Regardless of bucket number, each bucket may then be normalized to a particular value. This ensures that it is possible to meaningfully compare time to completion and ratio of studies completed (for example).

The machine learning model(s) that are being utilized in the unsupervised clustering are generated by utilizing a collection of known metrics for a given participant along with their sets of features, all stored in a known metrics database. For example, if a participant has engaged in a statistically significant number of studies, their scores may be measured, and trained using a deep learning technique (and other clustering techniques) to compare their known clusters to their features. In some embodiments, all features are tabulated, a vector set is defined for each participant for their features, and the vector sets are leveraged to train the model against the known clusters. In alternative embodiments, a clustering table may be employed.

In some embodiments the clustering is performed by k-means clustering, which measures the distance between all points and identifies a centroid. Each profile will belong to a single cluster per study type-country pair (one cluster per model). Once the clusters for the participants have been generated, a lookup table (a profile cluster table) is leveraged, which indicates which cluster a profile/participant fits within based upon the geography/country of the participant and the model type (different models are utilized for different study types). Once the cluster for the profile is ranked based upon geography and model (using the profile cluster table), and a set number of the highest ranked participants may be presented with an offer to join the study. In some embodiments, lower ranked participants may be included in some lower percentage. This ponderation with lower ranking participants is employed to avoid bias. In some embodiments, the set number of participants asked to join the study is based upon total study size, and difficulty of identifying a participant that meets all study requirements.

An invite number is calculated, by a supply estimator 634, for how many individuals from each panel supplier could conceivably be extended an invitation to join the study, subject to the initial filtering, and as ranked by their scores. An offer extended 636 may utilize the estimated capacities of the various suppliers to actually extend invitations to join the given study. Invitations may be active (e.g., a push notification or email) or passive (e.g., call to action in a study listing dashboard). This offer extension is always subject to the constraints and business rules discussed previously. For example, and panel supplier that falls below a quality threshold may be excluded entirely from participating.

Generally, after the threshold quality issue is determined, the offer extender 636 ranks the suppliers by price, and allocates the participant invitations to the suppliers in ascending order of their respective price/cost and calculated score. The tradeoff between study participant cost and their calculated score may vary based upon service level contract employed. A study administrator with a very high (and therefore costly) service level contract may receive the highest scored participants regardless of their respective costs, while a lower service level contract will look for a local optimization between score values and overall costs. However, when two suppliers are substantially similar in cost and scores for their participants, then the system may alternatively determine the invite allocation by looking at the relative capacity of the various sources, and leveling the load imposed upon any given supplier.

After invitations to join the study are sent to one or more of the panel suppliers, the rate of acceptance can be monitored, and the number of invitations sent modified by a supply throttle 638. For example, if a lower cost and/or higher scoring set of participants supplier ends up filling participant slots much faster than anticipated, then it is likely the estimates for the available participants was incorrect, and the total number of invitations may be ratcheted back. Additionally, it may be beneficial to batch release invitations in order to spread out study engagement. This allows the study systems to reduce spikes in computational demand, and further by extending study time to the limits of the service agreement with a client, the costs to the study provider can be more readily managed. Further, initial study results often times lead to changes in the study questions or objectives in order to explore specific insights more fully. By extending study invitation release, the throttle 638 allows time for such study updates to occur.

In addition to sending out invitations and collecting acceptances, the system may be configured to collect legal consent for the collection of personally identifiable information from the participants to satisfy various privacy laws (e.g., GDPR). This legal consent may be tailored for the particular study, for the specific study author/client more broadly, or for any future studies the participant chooses to engage in.

Returning to Figure 6A, the task setter 620 provides the tasks for the given participant to a campaign interface 660. The participant selector 630, provides the participant for the tasks to the campaign interface 660. The campaign interface 670 then populates a test database 660 with the appropriate test functions, and these components operates in tandem with the participant portal 532 to actually present the study tasks to each respective participant 540.

As noted, before, a feedback loop exists from the AI systems, and particularly an AI driven test adjuster 537 to provide recommendations 650 back through the system to allow on-the-fly adjustments to participant selection (in some embodiments through the sourcer), and task selection based upon participant type. Although not illustrated, the recommendations 650 may also be provided to the test builder 610 for the generation of entirely new tasks, and to the campaign interface 660 to provide dynamic alterations to studies which are in process. Each of these scenarios are discussed in more detail below.

One example of real-time study alteration would be when a participant's results are sub-optimal for proper insight generation. This often occurs when the participant is entering nonsensical information into a text box, is having microphone issues, or is not dictating enough. In the instance that there are microphone issues, or the user is not explaining their thoughts and actions enough, the recommendation may provide the user with a prompt to either unmute their microphone (when there is no sound being collected), to speak louder (when the microphone input is below an amplitude threshold) or provide more dialog explaining themselves (when a speech ratio is below a given threshold). The system then awaits an alteration in the participant's output. IF a change does not occur within a configured time period, the user may be thanked for their participation, and the study may be prematurely ended. Study termination may also take place when a user is inputting non-sensical data to get around character minimums or the like. These early-termination studies may be discarded immediately, and a note may be entered in the participant's profile. When termination is due to a participant entering nonsensical information, or refuses to increase their dialog levels, the participant's quality score may be directly impacted. For issues unrelated to the participant's intentions (a faulty microphone for example) the quality score may not be immediately impacted, but if the issue persists over more than one study, their quality score may become impacted.

For task selection, the adjuster 537 may monitor task data collection, and generate recommendations 650 related to tasks that are needing further data collected. These recommendations 650 are provided to the task setter to modify the frequency in which particular tasks are selected for testing. Suppose a task includes questions regarding a webpage's appearance, and significant quantities of data have already been collected regarding this data point from this task and others (such as unsolicited observations regarding the webpage in a navigation task, for example). The recommendation 650 may then include the decision to reduce the times this particular task is presented in exchange for the increase in tasks that yield more insightful/less frequent datapoints. As will be discussed later, sentiment and semantic analysis is leveraged to provide insights regarding the study. The frequency of a semantic topic found in the results may be utilized in order to determine which tasks are deemed still 'important' as compared against another. For example, assume a navigation task has a chance of including the topics of 'color', 'appearance', and 'clarity'. Also assume a task related to categorization results in topics of 'clarity', 'appearance' and 'use'. Assume the system has collected a significant number of datapoints related to 'clarity' and 'appearance', but very little data related to 'use'. The system may generate recommendations 650 to reduce the amount of the navigation tasks needed but increase the categorization tasks.

In addition to making recommendations 650 as to which tasks to deploy, the adjuster 537 may likewise provide recommendations 650 as to new tasks to generate in the test builder 610. For example, assume that a sentiment and semantic analysis uncovers an insight (as will be discussed in significant detail below) that has previously not been identified. An example of such would be if the system determines that there is a topic of 'sidebar' and a strong sentiment associated with it, such as 'confusing'. Also assume the system has no direct questions or other tasks associated with the sidebar menu. The recommendation 650 may cause the test builder 610 to automatically generate a new task related to the insight. The most easily automated task would be to prompt the user with a query, such as "how do you feel about the sidebar?". This, and similarly structured question tasks may be readily generated leveraging existing templates. These automatically generated tasks may have their results reviewed, and if no meaningful insights are gained from the automatically generated tasks, they may be automatically discontinued. More involved or complex tasks around the insight may require human intervention. In these situations, the system may provide a notification to the UX researcher 510 noting the insight and inquiring if the UX researcher wishes to generate a new task for the insight. This leaves the decision-making power in the hands of the study author. If the UX researcher 510 declines to generate a new task, the system AI is able to train itself using this data. In the future this, and similar insights may not trigger a recommendation. However, if the UX researcher does decide to generate a task, the fact that this kind of insight is considered relevant, and the task structure deployed by the UX researcher may assist the AI model in generating an automatic task build in the future.

Lastly, the recommendation 650 may be for participant selection. As noted before, results for the participants may be tracked, and alterations in who is selected for a study may be recommended. For example, if a participant 540 with a given set of attributes is providing input that is resulting is significant insight generation, the recommendation 650 may be to select additional participants with a similar set of attributes. Conversely, if poor results are being collected by a certain type of participant, others like them may be avoided during the selection process.

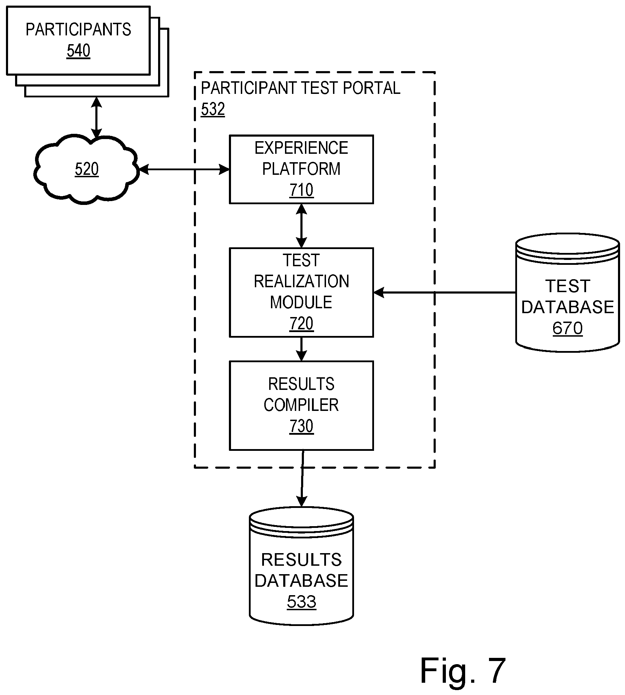

As noted before, once tasks and participants are selected (with or without recommendations) they are provided, respectively, to a campaign interface 660, which is responsible, in connection with the participant portal 532 for actually administering the test. Details of the participant test portal 532 are provided in greater detail in association with Figure 7. The test portal 532 includes an experience platform 710 which the participant 540 can directly access using the network 520. While the experience platform 710 may be comprised of a native application hosted on the device of the participant 540, more frequently, the experience platform 710 may be hosted on a web browser or the like. The experience platform 710 provides the graphical interface necessary for the deployment of the tasks to the given participant.

The test database 670 has data from the campaign interface 660, including task-participant pairings, and data around the tasks themselves. The test realization module 720 takes this raw data, and generates a test for the participant, which is administered via the experience platform 710. In turn, the test realization module 720 collects data from the participant (generally in the form of text answers and audio video recordings- both video of the participant, but video screen capture of the participant's screen). Additional data may be collected from the participants, such as quantitative answers (for example single or multiple-choice answers and other types of questionnaire questions, that result in the creation of a synthesis graph that summarize the answers of one question). This collected data is fed back through the realization module 720 to a results compiler 730. The results compiler can index and append metadata to the results and stores them in the results database 533. In some embodiments, some initial cleaning of the results may be performed by the results compiler 730 in order to reduce computational stress on the downstream AI systems.

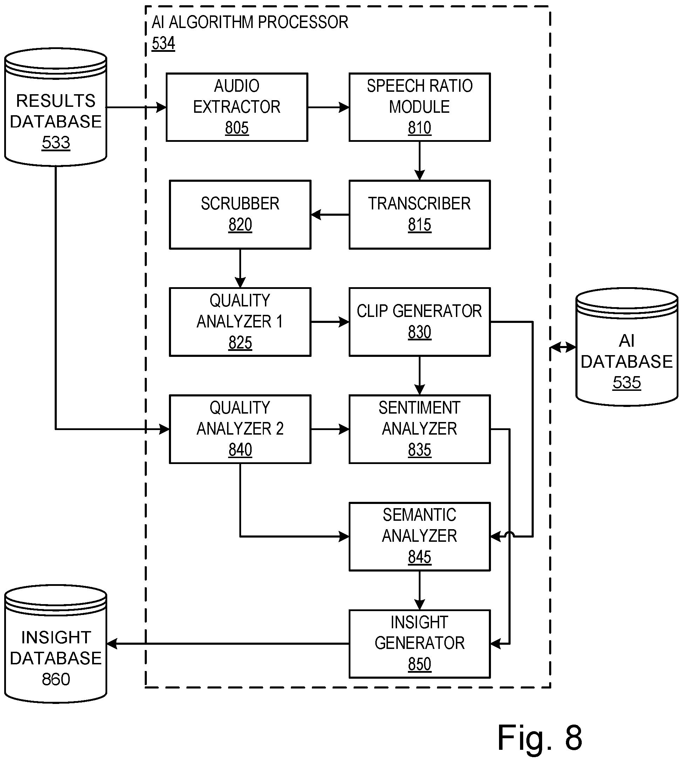

Turning to Figure 8, the AI algorithm processor 534 is displayed in greater detail. The AI algorithm processor 534 is a computationally intensive AI modeling system which consumes the results of the studies, from the results database 533, in order to generate actionable insights, and additional output. The AI algorithm processor 534 has two fairly discrete workflows based upon the particular tasks being analyzed. For example, the typical output of survey tasks is a free form text file(s). Conversely, navigation tasks, click tasks, and the like, may result primarily in a video file being generated. Tasks may also have both results present- a video file of the task and a text file of a final survey question for example. Regardless, the AI algorithm processor 534 consumes these files independently, and in different ways.

For a video file, the first stage in the analysis is to extract the audio portion of the data, which is performed by an audio extractor 805. The waveform of the audio file is then analyzed by a first AI model which is capable of determining the portions of the audio file in which someone is speaking, versus non-speaking portions. This is performed by a speech ratio module 810 which generates a ratio value for speech to non-speech for the audio file. In some embodiments, the AL algorithms for the waveform analysis are language dependent and may be configured based upon the participant's profile information. In other embodiments, the waveform analysis detects human voice spectral characteristics in the audio and not the spoken words themselves. The speech ratio module 810 is capable of computing the ratio of speech to that of non-spoken time. The UX system 530 filters out data where the speech ratio is below a configured threshold. For example, audio files in which the participant is not speaking at least 10% of the time may be automatically removed from the results database. In some embodiments, this ratio threshold may be dynamic based upon participant attributes, number of results collected, computational load versus available computational resources, and most importantly, based upon the task type, or the like. For example, suppose a study really wants the input of 25-35-year-old black women who have a particular profession. The vast majority of participants that can be fielded do not fit this set of preferred/ideal criteria, so when such a participant is found, their requires speech ratio may be set to 7%, whereas a white unemployed male over 45 years-old may have a required speech ratio of 15%, for example.

Once the audio files have been filtered in this manner, the audio file is provided to a transcriber 815 to convert the audio file into a text file. There are a number of known transcription techniques available, and as such for the sake of brevity this disclosure will not go into detail regarding the nuances of audio file transcription. However, it should again be noted, relevant information, such as language used by the participant may be leveraged during the transcription process. The transcribed audio is then cleaned by a scrubber 820 which corrects for obvious grammatical problems to better "guess" what the individual is saying (as transcription technology, while very good, is not perfect). This transcription is stored for display to UX researches 510 when requested.

Subsequently, the scrubbed transcription is sent to a quality analyzer 825 which determines if the scrubbed transcription 'makes sense' and meets the quality required for further analysis. Quality analysis may be an automated process, or may be defined as quality from the UX research point of view: if he/she feels that the transcription is not accurate enough for being useful in his/her scope, then he/she can manually set the transcription to "not acceptable" (or "acceptable" if good enough quality). In some embodiments, a validation button is included directly in the video player page below the video to gather that feedback. A Machine Learning model is trained onto all the manually labelled transcriptions in order to get automatic prediction of the transcription quality from UX researcher's point of view. Any transcriptions which survive the quality check is then subject to clip generation by a clip generator 830. Transcriptions that do not survive quality checks may be omitted from being displayed along with the video on the user experience video player page.

The clip generator 830 operates by initially taking the scrubbed transcribed audio and compares the transcriptions to questions asked within the study tasks and filters out these portions of the transcriptions. People tend to read out loud when performing tasks. Such information is not useful to the analysis of the task results. The system utilizes word matching to determine when there are consecutive strings of words that match a given prompt. When a sufficient number of such words are identified within a given sentence segment, the portion of the transcription may be flagged for removal from analysis. In alternate analysis, the questions are split into chunks (usually sentences) and then a sliding window is used on the user transcription to search for a match with one or several of the question chunks (match within a given error margin). Another alternate method is to train a machine learning model that identifies "questions reading out loud" in transcriptions (with sliding window also for scanning the text).

Next the clip generator 830 parses the transcriptions into individual sentences. Grammatical cues, and speech cadence/pauses may be utilized to delineate the end of one sentence from another. Punctuation generated by the transcriber 815 is particularly helpful in delineating sentences. Each sentence is then analyzed for the presence of particular keywords of interest. The keywords are all found in a corpus of desired keywords, each associated with a 'score'. This corpus may be populated using an unsupervised machine learning (ML) analysis of test sentences. The algorithm is thus able to, based upon past sentences that have been utilized or upon an entire corpus of manually created video clips that have been collected, identify the words of interest and assign them values. A word like 'a' may have zero value. However, a word like 'great' may have a significant value. The values of all words located in the sentence are summed, resulting in a sentence value. In some limited embodiments, the sentence value may be adjusted by sentence length. For example, if two sentences have the same raw value, but one sentence is nearly twice as long as another, its value may be adjusted lower as a result (as it is a less 'value dense' sentence). In other situations, sentence length is not considered in determining sentence values. Sentences with values over a set threshold may then be flagged for clip generation. The resulting sentences are sent to an aggregation module that aggregates consecutive sentences depending on criteria such as the length and the duration of those sentences. In some instances, there is a minimum and maximum values that are implemented in the aggregation module. If two sentences selected as video clips by the algorithm are consecutive in the transcription, and the total duration and word count after possible merging of the two sentences is above/below min/max values set, then those two (or more) sentences are aggregated as a single clip. The transcription timing metadata has been maintained throughout all the filtering and transforms, and as such it is relatively trivial to edit out video clips from the full, raw video file.

After the clips have been generated, however, there is an additional step whereby the clips are analyzed by a supervised ML model against clips that have been previously generated. Thus, if the newly generated clips 'look like' clips that have been previously generated by a human operator, then these clips are outputted for further analysis. Clips that don't 'fit' the expected clip content are discarded. After clip generation, the results are then sent for sentiment and semantic analysis for the generation of insights.

Like video clips, text files may also be analyzed before insights are generated. The text files are sent to their own quality analyzer 840 for determination if the text is usable text, or if it is 'garbage' text. In some cases, a task participant becomes lazy or bored and chooses not to answer the question posed to them. In order to advance in the tasks, the participant may be required to input a certain number of characters, however. In such situations the user may simply hold down a key, or type random keys, in order to continue. The quality analyzer identifies when the text file includes grammatically correct (or approximately correct) sentences versus such 'noise'. Clearly 'garbage' text may be discarded, whereas text that appears to be real task results may be maintained.

Text that survives the quality check, along with the generated video clips, are then analyzed for semantics and sentiment, by a semantic analyzer 845 and a sentiment analyzer 835, respectively. The semantic analyzer 845 identifies topic words and descriptor pairs within the transcription or text file. This analysis is performed by using a conceptual lexicography to identify prototypical words for each word in the sentence. For example, the terms 'pretty' and 'beautiful' may all be converted into 'attractive'. Noun-adjective combinations may be identified, as are verb-adverb pairings. After identifying pairs of entity-qualifier, there are some entities (a lot usually) that can remain "unresolved" such as "it"/"this"/"that"/ etc.. For example with question "what do you think about the color of the footer?" the participant answer could be "I find it beautiful but maybe too dark". In such a case extracted pairs would be it-beautiful and it-too dark since the question is not stored with the answer. To solve that problem, all entities that are not resolved (e.g., the entity is not a noun or if entity is "it"/"this"/"that"/ etc.) are sent to a coreference resolution module (not illustrated) within the Semantic Analyzer 845. This module looks at the previous sentence (if working with speech-to-text transcription) and at the task instruction, identifies entities there and tries to match them with the unresolved entities. At the end of the process some entities can still remain unresolved and these are retained anyway (a UX research could still benefit from the qualifier information and relate it to an entity).

Similarly, the sentiment of the subject-description pair is analyzed by the sentiment analyzer 835 in some limited embodiments. In alternate embodiments, the sentiment analyzer 835 applies sentiment analysis to the full text or sentence chunks. As such, there is a single sentiment score for the entire video clip that is generated. In some cases, sentiment analysis is performed by single word sentiment matching and inversion if qualified by a negation word (e.g., "not"). In alternate embodiments, a dedicated ML model may be employed, trained on a corpus of sentiment analysis sentences, to determine sentence sentiment. This model may be a supervised machine learning model trained on tens of thousands of text answers stored in the UX system's 530 databases.

Possible values are positive, negative, neutral (lack of sentiment), and mixed (both positive and negative sentiment found in different parts of the same answer). To generate this training set, it is possible to label questionnaire data directly on the results visualization page: the sentiment generated by AI (using Google Cloud Natural Language service at first) can be displayed on the page next to each answer, with a button to manually validate the proposed sentiment and with the possibility to edit it. In this manner tens of thousands of labels have been collected and then used to train a ML model on it and finally switching to that new model (80% accuracy vs 60% accuracy for Google's model). In some particular embodiments, concerning the ML model itself, it consists of a word embedding step using BERT algorithm that vectorizes each text answer, followed by a classifier.

The results of the semantic and sentiment analysis are then provided to an insight generator 850 which, among other things, is capable of generating a matrix of semantic pairs coded by the sentiment for the pairs. This matrix is aggregated across all participants within the same study and can be filtered and analyzed in a number of ways. Insights Generator 850 runs independently from all other algorithms. All other previous steps are sequential and happen in the order shown on Figure 8, which are processes dedicated to a single data source analysis (single video, single open-ended answer) while Insights Generator 850 runs on a periodic basis taking as input all the available data that has been processed before.

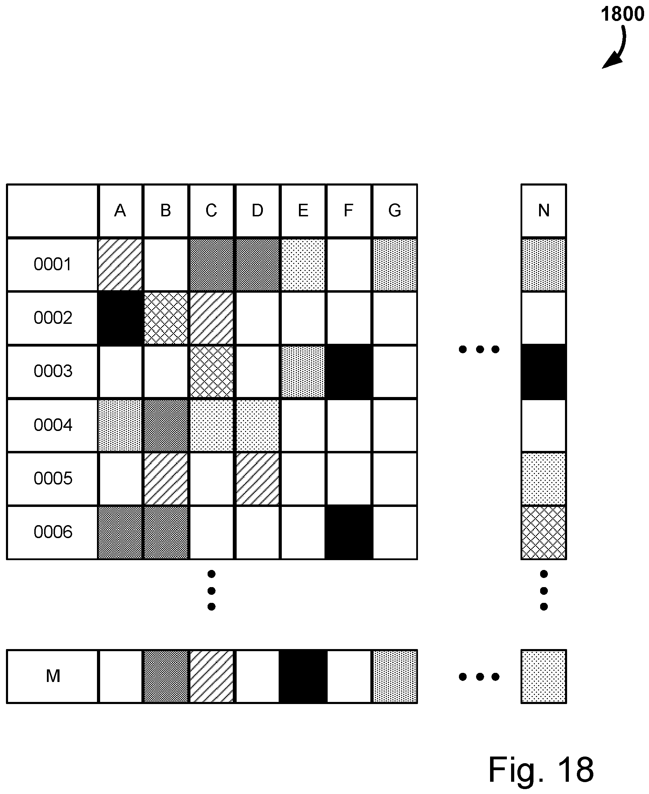

Figure 18 provides an example of such a matrix, shown generally at 1800. In this example matrix there are a plurality of column A-N and a plurality of rows 1-M. in some cases, N and M may be the same number, but this is certainly not required. The row and column each represent a semantic pair that was uncovered by the semantic analyzer 845. For example, row one may include the heading "navigation" and row two is "appearance". Column A may be the term "clear". Column B may be "attractive". As such, the intersection of column A and row one would be the pairing 'navigation-clear'. Row one, column B would be 'navigation-attractive'. Row two, column A would be 'appearance-clear'. Row two, column B would be 'appearance-attractive'. The sentiment analysis for these pairings is then presented as a color, or other designation, in the matrix where the column and row meet. Note, due to the restrictions placed upon figure format, in the present Figure 18, the boxes are left blank where there are no such semantic pairs present, and with different hashing or shadings based upon relative degree of sentiment. For example, assume the solid black boxes are a strong negative sentiment. This indicates that people really dislike the clarity of the appearance, indicating the layout may be too 'busy' or crowded. However, the cross hatch may be a positive sentiment, indicating that even though people found the appearance pretty, despite the lack of clarity. In this example, there were no instances of the navigation being defined as attractive, but the diagonal hash may indicate that people found the navigation mildly clear. The matrix can be filtered by any possible metadata attached to participant answers and videos. Some filter examples include: by task within a study; by question within a questionnaire task; combination of multiple tasks and questions within a study (ex: want to group pairs for two identical tasks but one for mobile participants and one for desktop participants that do not see the exact same interface but are asked the same question); by data type (ex: questionnaire answer, video clip generated by AI, video clip manually generated); by participant profile (genre, age, etc.); by sentiment; by occurrences (threshold on the number of occurrences of a given pair within all the participant answers); by the content of the pair (ex: all pairs closely related to certain UX concepts / tags); simple relevance filtering based on a pre-computer list of most relevant entities and/or qualificatives; and automatic filtering of pairs that rely on the predictions of a ML model trained on pairs that are used in practice by UX researchers.

Returning to Figure 8, the insight generator may also generate insights, such as the extraction of 'suggestions'. The text answer or text transcription of a video clip passes through a model that extract the nature of every single word (e.g., nouns, verbs, adjectives, etc.) and then extracts dependencies between words, which is then used to generate pairs of entity/qualificative on one hand, but also extract suggestions on the other. The Suggestions correspond to information containing a conditional word such as "should," "may", "must", "might" etc. and then are stored as a separate kind of insights that could be displayed on the synthesis page along with the 2D matrix, and would benefit from the same filtering as for the matrix. It is then possible to quickly isolate the suggestions made by participants about an interface in general or about a specific element of an interface, all at one place so that UX researchers / customers get the big picture about how to improve the interface. All such insights are then stored in an insights database for consumption by the analytics module 536.

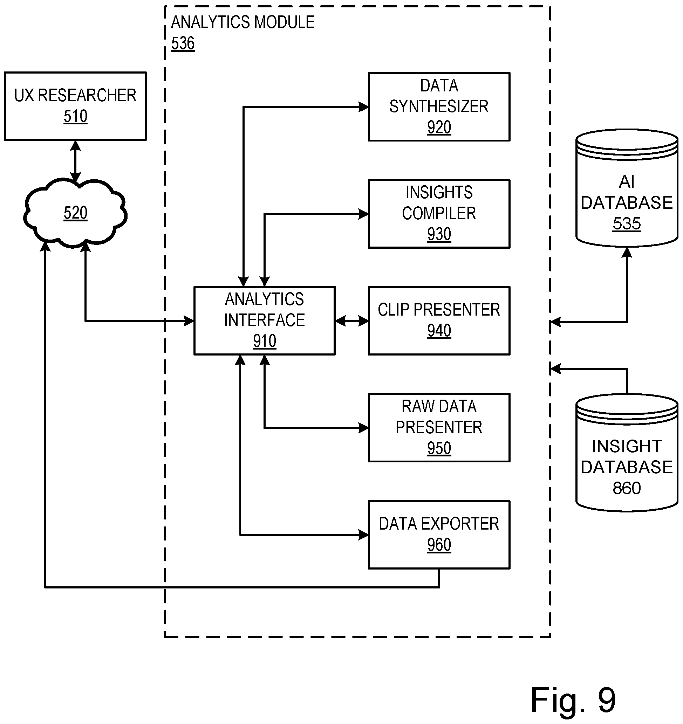

Figure 9 provides a more detailed view of the analytics module 536. Like the AI algorithm processor 534, the analytics module 536 relies heavily upon AI algorithms stored in the AI database 535. The analytics module 536 also consumes the raw outputs of the studies (not illustrated), and the output of the AI algorithm processor 535 via the insights database 860. The analytics module 536 includes a number of subcomponents that all work in parallel to generate the consumable output for the UX researcher 510. A data synthesizer 920 is a heavily automated AI driven module which automatically synthesizes together relevant data for easy consumption. This includes consuming the semantic and sentiment analysis previously disclosed to generate graphs and other interactive metrics for the UX researcher 510. This includes the generation of two-dimensional entity-qualifier (semantic pairings) as well as quantitative data graphs with filters on user criteria, tasks, tests, as well as other filterable dimensions. Quantitative data graphs are the results of the compiled quantitative/structured answers from questionnaires. It is possible to have questions in questionnaires that ask for a quantitative answer (e.g., single or multiple-choice answer) but with an optional open text field to explain / give more details about the answer. In such a case (very common) it is possible to analyze the quantitative answer with AI that will influence the way to analyze the qualitative answer. Some applications would be to check if open answer is consistent with the quantitative answer and discard the participant data if not, and to group video clips, open-ended answers and graphs as sources of a same insight (instead of graphs being independent and analyzed independently).

The data synthesizer 920 may also make a query if additional data is required to make a full set of insights from the synthesized data. If additional data is required to make a full set of insights from the synthesized data, then the UX researchers can decide to use Clip Presenter 940 and Raw data presenter 950 instead to make a more granular analysis of the data and in the end getting back to the Data Synthesizer 920 to complete the desired insight. Another component of the analytics module 536 is the insights compiler 930. Also, a highly AI model dependent component, the insights compiler 930 is capable of generating a dedicated page with pre-generated insights formulated by the AI algorithms. The automatic insights page would analyze all the available high-level data (at their most advanced AI processing state, essentially data displayed in the Data Synthesizer 920) and would make decisions on what are the most important actionable insights to show to the customer, as if it was done by a UX researcher. In other words, the Data Synthesizer 920 shows all the AI-processed data so that the UX researcher can play with and build insights from it, while the Insights Compiler 930 shows a ready-to-use synthesis of the entire study for customers/UX researchers that don't want to do any manual analysis of the data.

In practice, that page could look like a dashboard with graphs and a page scroll with the main insights compiled by the AI in the form of boxes, each box content having: question/context, a textual description/synthesis of the answers written by the AI, the global sentiment, occurrences, and importance of that insight, and optional recommendations. To do so, the AI would use the data from semantic analysis (pairs and recommendations from users) as well as machine learning models trained on insights and suggestions stored in the insights database 860 (made by UX researchers) to identify the most important content to be displayed on the page, and to write description and suggestions automatically based on how humans wrote such kind of content.

The remaining display components include a raw data presenter 950 and clip presenter 940. Both these sub-components are less reliant upon AI algorithms, however, for more 'advanced' UX researchers, still provide a wealth of actionable information. The clip presenter may take the automatically generated video clips and format and present them to the UX researcher 510. This may include clustering the clips for display by the task provided, by the participant, or by topic of interest (high value keyword) in the clip. The system arranges the clips such that when the UX researcher 510 selects a given clip, they are provided with the entire recording of the task, but are immediately taken to the start point of the clip. In some embodiments, the transcription is likewise presented to the UX researcher 510. This is one of the primary features of the Clip Presenter 940, so that UX researchers can directly read content from video clips without the need to watch the videos. And then there would be a possibility (more "secondary") to access the entire recording of the task if needed for getting a bigger picture and/or editing a clip The UX researcher 510 is provided complete control to skip around in the entire video as they choose. Other possible clips in the recording may be identified for easy navigation by the UX researcher 510.

The raw data presenter 950 provides the UX researcher 510 unfettered access to the raw video files and raw text files from the various studies. Generally, these are arranged by tasks, by participants, or by majority topic, when applicable. Any generated insights may be displayed in conjunction with the raw files, but the data is in no way curated for the UX researcher 510, thereby allowing her to review the full data sets in any manner she desires. The raw data is of course filterable by any number of dimensions (e.g., participant, participant attributes, tasks, insights present in any given data file, presence of semantic pairings, general sentiment of the responses overall, etc.).

The data compiled by each of these discussed sub-components is compiled together into an interactive display by the analytics interface 910. This interface includes a graphical user interface, often substantiated by an internet accessible browser. In some embodiments, the analytics interface 910 works in conjunction with a native application running on the computer device of the UX researcher 510. In some embodiments, whenever data from tasks is updated, the analysis and analytics are updated in real-time, and the new results become available to the UX researcher 510. In such real-time updated systems, push notifications or other messages (including updated analysis data) may be provided to the UX researcher such that they remain informed of any updates in real-time.

The analytics interface 910 may also couple to a data exporter 960 that is capable of formatting and generating exportable data for the UX researcher 510. In some embodiments, the data exporter allows exporting raw data into Excel, Word or Powerpoint files. The granularity of the data may be chosen for the Excel format such as including or not task instructions, open-ended answers and raw database IDs for quantitative answers versus text-translated quantitative answers. The Excel exports are then used by customers for making their own analysis from it. In some cases exports may also include insights, AI data next to each answer (e.g., sentiment and semantic info), 2D matrix data; and exports of any AI insights compiler data.

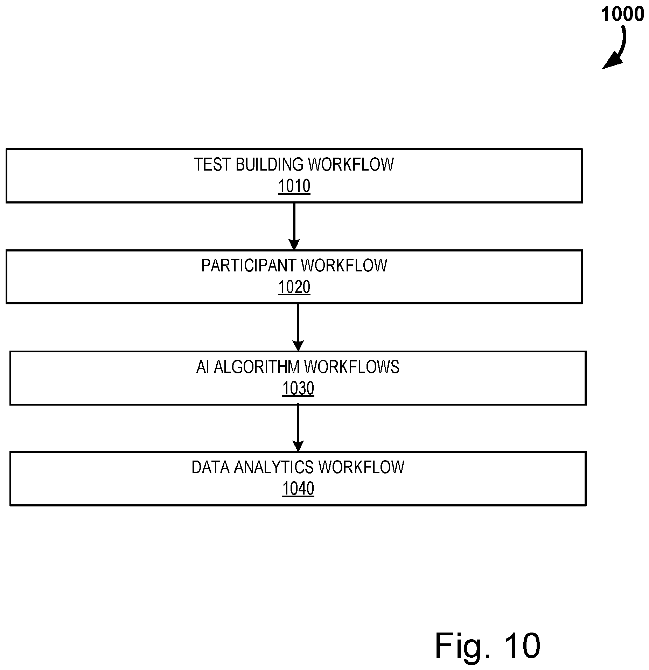

Turning now to Figure 10-17, process diagrams are presented for the various methods of generating, administering, and analyzing the results of a UX study. These diagrams provide one method of possibly many different possible methods of completing the tasks of executing an end-to-end UX workflow. These figures are presented in a nested manner, with one flow diagram coupled to the others. While this is a useful paradigm for understanding the general flow of the method, it should be noted that any given sub-process may be altered, omitted, or replaced without substantially impacting the remaining workflows. Thus, while the method may, for example, present a particular methodology for participant selection, another totally different participant selection method could instead be applied without disrupting the remaining flow.

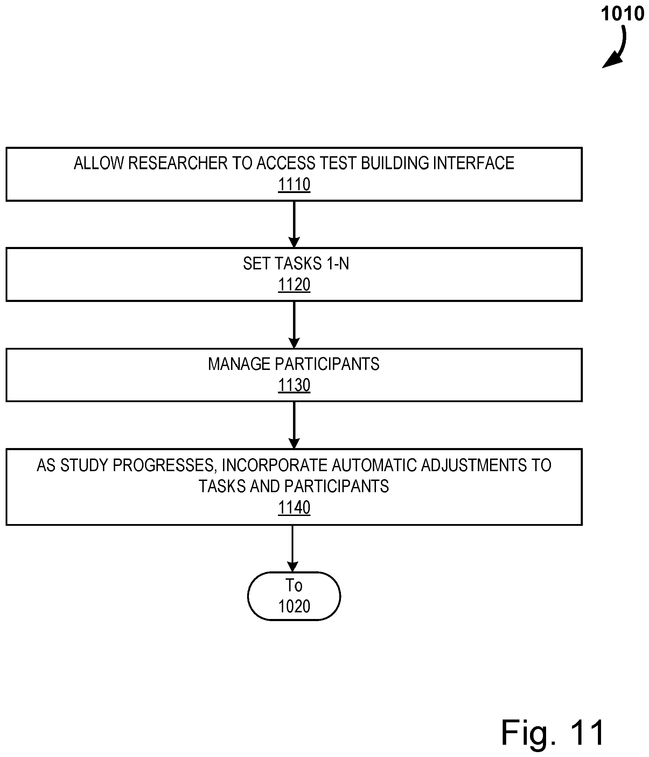

Figure 10 provides the top-level process, shown at 1000, for an end-to-end UX workflow. This includes the test building workflow (at 1010), the participants' workflow (at 1020), the AI algorithm workflow (at 1030) and the data analytics workflow (at 1040). Each of these broad workflows will be explored in considerable detail in relation to one or more of the following figures. For example, turning to Figure 11, the test building workflow 1010 is provided in greater detail. This workflow initially includes allowing the UX researcher to access the test building interface itself (at 1110). As noted before, access to the test building interface occurs via a network connection, typically via the internet. The interface may include an application running on the UX researcher's device or may be a browser supported graphical user interface. Once in the system the UX researcher has the ability to build and access studies. Studies typically include a plurality of test tasks. These tasks may be set (at 1120) via the interface. Generally, the system can provide templates or a guided wizard system to assist in the setting of the test tasks. Once all tasks have been set, the study may be ready for deployment.

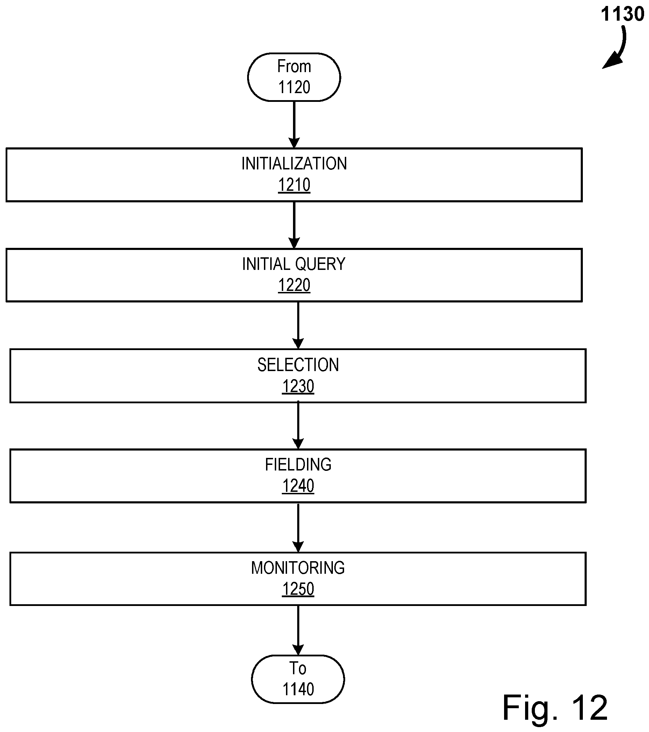

The next step to test building is to manage the participants which will be involved in the test administration (at 1130). Figure 12 provides a more detailed flow diagram for this participant management process. This example process begins with an initialization of the participant screening (at 1210). Here the study parameters are first detected. Parameters include the length of the study estimations, demographic criteria/participant requirements, score weights and or thresholds, and study type. Business rules are likewise received. These rules may have a default set of configurations, may be configured by the client directly, may be automatically generated leveraging machine learning, or in some embodiments, may be extrapolated from a service level agreement between the client and the participant sourcing entity. Participants are then filtered to remove duplicate participant records, to remove participants that have been found by the system to be fraudulent and/or below a basic quality threshold, and to remove participants for which attributes are known that do not meet the study requirements. Quality and fraudulency metrics for a participant may be gained through temporal tracking of prior participant activity, unusual answer patterns by the participant, or by specifically 'testing' the participants by red-herring style questions or questions that look for consistency in the participants answers.

After initialization an initial query is performed (at 1220). The initial query is when the panel sources are contacted to determine sample availability, pricing and estimated time in the field from the sources.

Subsequently, the selection of the participants is performed (at 1230). The study requirements that have been received directly from the study administrator, or as parsed out from the free-form text input are first received. Questions for the requirements are generated based upon the correlation of some attributes to the given requirements.

The attributes/features that are already collected for the participants are then accessed, and the system may perform an initial filtering of the participants based upon "threshold attributes" which are known for most participants and are requirements for the study. Age, gender, income, and the like generally fall within this category of threshold characteristics. Likewise, when a participant has an attribute that is known already, that fits into the requirements of the study administrator (or the generated requirements for features), these participants may likewise be subjected to an initial filtering based upon these known features.

For the participants that survive the initial filtering, a determination is made if there are attributes that are required that are not yet within their file. When such attributes are indeed missing, the system may first attempt to impute the missing attributes from known attributes by way of the correlation between attributes. If the attribute cannot be imputed with a high degree of confidence, the participant may be asked the necessary question(s) to collect the missing attribute information. Once the needed attribute information has been collected, a second filtering of the participants for the attribute requirements may likewise be performed.

Once participants with all needed attributes have been identified and compiled, the attributes may be correlated to a set of relevant scores. In some particular embodiment, the scores may include: 1) time to completion, 2) time to qualification, 3) time to first response, 4) ratio of studies completed and 5) evaluation from previous studies from clients (feedback). This listing is of course not exhaustive, and other relevant metrics may also be computed based upon the embodiment. Participants with a score below a required threshold (set by the study administrator) may likewise be filtered out at this stage of the process (when applicable). After the scores themselves have been generated, a set of weights for the various scores may be retrieved from the study requirements (when available) or a default set of weights may be leveraged. In some embodiments, the weights are equal.

Using these numerical weights, a single score may be compiled for the set of metrics using a normalization of the metrics, and then a weighted average of them. Payment models for the study administrator may also be accessed, and the score and payment model may be leveraged to pick the final set of participants for extending the offer to. In some embodiments, this selection is an optimization between a cost for the participant and the score. The cost and score are weighted in this optimization based upon the payment/pricing model the study administrator is subject to.

After participant selection is thus completed (or on an ongoing basis as participants are joining), the participants are fielded (at 1240). A profile/file is generated for each participant based upon data known by the panel source that is supplied, as well as data for the participant that has been previously discovered from an earlier study that the participant management system has stored. It is possible, based upon sources of the participants, and prior tasks by the participants, that each participant file may include differing degrees of information. This file is provided to the study administration server (user experience testing system), enabling questions and or tasks that are redundant (answers are already known for) to be preconfigured for the given participant. This increases efficiencies for the study author, as well as reducing testing time for participants (reduced participant fatigue). Subsequently the participants are supplied to the study. As the participant engages in the study, data regarding participant targetable attributes, scoring, and numbers involved in the study are reported back. This information is used to enrich the dataset regarding the participants for future studies, as well as assisting with participant sourcing throttling. The last step in the participant management process is the monitoring of the resulting outcomes (at 1250).

Returning now to Figure 11, after participant management, as the study progresses, recommendations are generated by the underlying AI system. These recommendations are incorporated into all stages of the test building workflow (at 1140). For example, when a unique insight is generated for which there isn't a good task yet defined, the system may automatically generate a new task for the study, or engage the UX researcher in the process of generating a new task.

Similarly, based upon study progression, the tasks that are selected for deployment in the study may be altered based upon the kind and quality of data that has already been collected. For example, if a given task 1 studies the attribute X of a user interface, and task 2 studies attribute Y, and sufficient data has already been collected for attribute X, the system may recommend limiting the number of studies deployed with task 1 but increase the deployment of task 2.

Recommendations may likewise be provided for ongoing studies in real-time. For example, if a participant's microphone isn't picking up the participant well, the recommendation may be to request the participant speaks louder and/or adjust the microphone position. If the microphone issue persists, the system could prematurely terminate the study, as the results would be useless anyway. In a similar vein, if the results that are being processed show that a particular insight is generated, the system may recommend the participant be presented with a new or different task responsive to the collected insight.

Lastly, recommendations may be provided for the participant selection process. If results are showing that a particular 'type' of participant is generating very useful insights, the system may weight participants who exhibit attributes aligning with the identified 'type' such that more of these participants are selected. Conversely, the system may devalue other participants, resulting in them being chosen less frequently for a study or particular tasks. For example, assume one task is a complex and lengthy navigation task, and only high quality/score participants are generating decent insights for this task. The system may ensure participants with a lower score are not presented this task (although they may be assigned other tasks that do not exhibit this sensitivity to participant quality). The adjustments made to recommendations is an ongoing process as more results from studies are collected and processed. Thus, while this step is illustrated as a singular instance of the adjustments being made, it should be understood that this step is continually occurring throughout the UX workflow.

After the test building workflow, as noted in Figure 10 the next stage is the participant workflow (at 1020). This workflow is relatively straight forward in that the designed tasks for the given participant are presented to the participant through a participant portal. This portal may be comprised of a web-based browser that the participant is capable of accessing via a network, or potentially as an application running on the participant's device. Importantly, based upon the task involved, certain results are collected. In some cases, the results include typed free-form text entries. In other tasks the collected results may include screen capture video, video capture of the participant, or both. In other tasks, such as card sorting tasks, the categorization results are collected. For some navigation tasks, the click-flow data is collected. In yet other tasks, click location, timing or keystroke inputs are collected. In other situations, some combination of these results is collected. However, for the purposes of the AI algorithm workflow, the results of interest include video (with attendant audio) files and free form text entries.

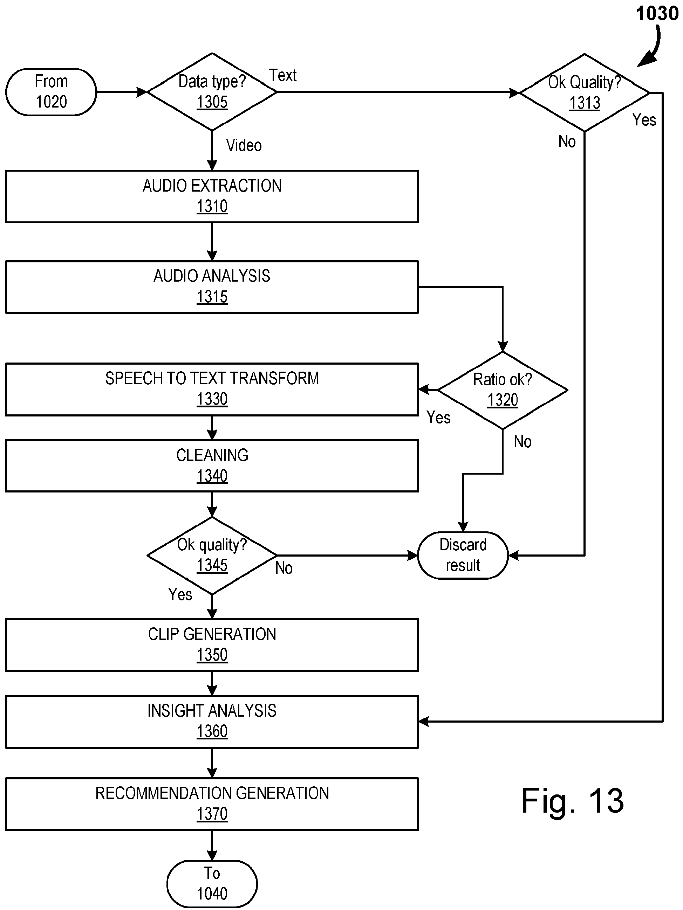

Turning to Figure 13, the AI algorithm workflow (shown at 1030) is provided in greater detail. In this example workflow, a seminal query is made as to the type of data that is being processed (at 1305). Text data is treated fairly different from video/audio data until the final insight analysis, and as such, disambiguating between these data types is needed. If the data type is video, the initial processing step is to extract the audio waveform from the video file (at 1310). A check is then performed if the speech ratio of the resulting audio meets or exceeds a configured threshold (at 1320). The speech ratio is calculated (at 1315) by determining what percentage of the audio file is the participant speaking. Waveform analysis of the audio file is performed to disambiguate between portions of the audio file with ambient or other non-speech sounds, versus the amount of time the participant is actually speaking. In some embodiments, the ratio of the speech required to survive this initial filtering must exceed 10%. In other embodiments, the ratio level may be assigned by the client or UX researcher. In yet other embodiments, the speech ratio may vary based upon the participant (or some attribute of the participant) or based upon the task itself. In some tasks, for example, the way the participant looks at the interface, and/or navigates it, may be more important than the speech. In such situations, the ratio may be set lower, for example. If the ratio is below the required threshold, the sample is discarded.

However, if the ratio is sufficiently high, the audio file is subjected to a speech to text transform/transcription (at 1330). A number of known speech-to-text algorithms are available, and for the sake of brevity, the details of the transcription process will be omitted from this disclosure. Generally, however, different speech-to-text models may be selected based upon language spoken, accent, and recording quality.

After the audio has been converted into a text file, the text may undergo cleaning (at 1340). Some of the cleaning involved disambiguation of non-sensical words based upon grammatical rules. Other cleaning involved may include removal or repetitions and hesitations, the addition of end of sentence punctuation when it is missing, removal of unnecessary capital letters in sentences, and the like. Subsequently, a check is made whether the text quality is sufficient to continue (at 1345) as discussed previously. If the quality of the transcription is below a threshold, the file is discarded, and no further analysis is performed.

After transcriptions of sufficient quality are generated, but before clip generation an unsupervised machine learning analysis of a corpus of annotated video clips is leveraged to generate a taxonomy of keywords (not illustrated). This listing of keywords associates a 'score' with each word. This score determines its relative importance for the determination of a segment of speech is 'worth' isolating for further analysis. The ML model is trained periodically using an unsupervised approach on all the available manual video clips data. And we store a list of relevant keywords with scores as an output. These keywords are leveraged below in relation to clip generation.

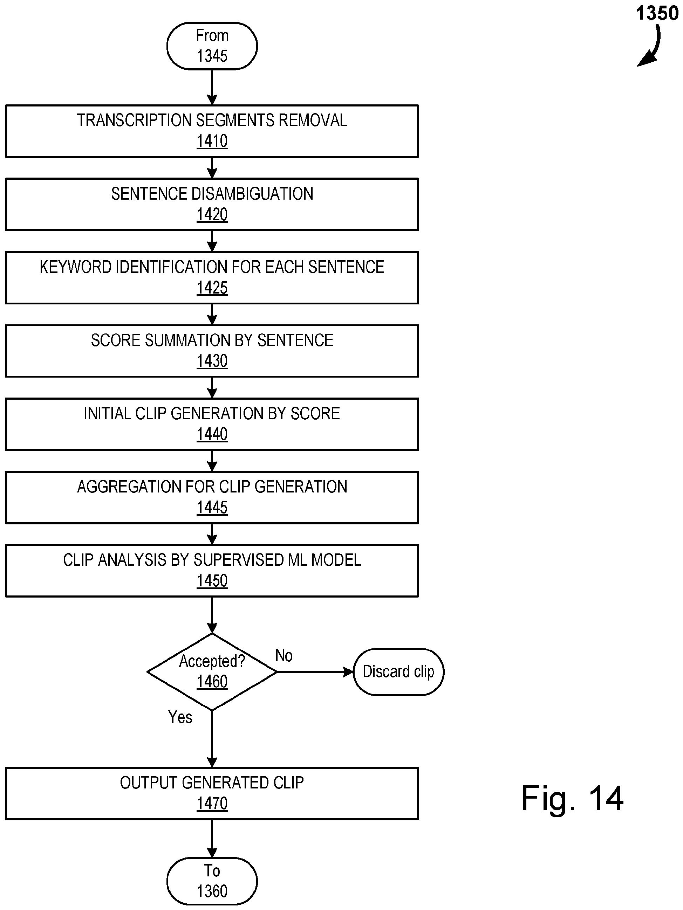

When the audio transcription is of sufficient quality, it is used to automatically generate video clips of interest (at 1350). Figure 14 provides more detail into this automated clip generation process. In the clip generation process, there is another cleaning which involves removal from the transcription of portions of the speech that are not relevant to the analysis (at 1410). For example, many users read questions posed to them out-loud. A recitation of the task instructions or question presented to the participant is not useful information for the purposes of insight generation. As such, the system may match text that is substantially similar to any material that was provided to the participant, and when a match is found, excluding this segment of the transcription from downstream analysis. There is generally a temporal element to this matching- if an instruction is presented to the user around the same time that the transcription finds a match, this is more indicative that the participant is simply reading the instruction. If the instruction and the match are not temporally proximate, it may mean that the user is remembering a piece of the instruction (or other prompt), and this may be deemed to be usable and relevant data for insight generation.

Subsequently, the transcription is disambiguated into different speech segments (at 1420). This is generally done around sentence boundaries, but may include shorter clause segments, or even sentence clusters. On a most basic level, speech cadence (pauses in speech, natural breaks, etc.) may be leveraged to distinguish between sentences. However, often a participant may pause mid-sentence or mid-thought, and as such, merely relying upon speech cadence is generally suboptimal for sentence (or clause or sentence cluster) disambiguation. In some embodiments, grammatical analysis is then used in conjunction with speech cadence to identify sentence delineation.

After sentence segments are disambiguated, the system identifies the keywords previously identified within each sentence/speech segment (at 1425). Each segment (be it a sentence or clause depending upon the system's functionality) may then be scored based upon the keywords present within the sentence/clause/sentence cluster (at 1430). As noted, before, each word has been analyzed by an unsupervised ML model to generate a 'value' or score associated with the given word. In some situations, only a limited list of words are present in the keyword dictionary due to a minimum score/value threshold. After this, the remaining words may be subjected to a renormalization of their scores/values such that each of these limited keywords has a score between 0 and 1. Each of these scores, for each word in the segment (or the limited number of scored keywords), are summed together to give the segment an overall score. In some embodiments, this raw score is leveraged for downstream clip generation, however, in alternate embodiments, the score for each segment is adjusted based upon the segment length. Thus, longer sentences may have their scores adjusted lower by a dampening factor that is linearly proportionate to the sentence length. This may be particularly important when the segment being scored is in fact a sentence cluster that is topically similar. Here, one segment may be comprised of a sentence fragment, whereas another segment may consist of two or three sentences. It is natural that the longer segment would have a larger score, even if the smaller sentence fragment includes a more 'value dense' discussion. Alternatively, in the situation where only the limited keywords are selected through a minimum score threshold and then renormalized, sentence length has significantly less impact upon scoring. In these situations, the score is determined by summing the scores for these limited keywords without any adjustment based upon sentence length.

The score for each segment is then used to generate an initial clip for the video (at 1440). In some embodiments, only segments with scores greater than a configured threshold are converted into an initial clip. In other embodiments, the clips are generated for the top X segments ranked by their scores. In more advanced analysis, conceptual identification and clustering of concepts may be employed to further assist in generating the clips. For example, in some embodiments, it may be advantageous to generate a clip for just one sentence, but rather generate a clip for every coherent thought of the participant, even if this thought spans more than a single sentence (at 1445). By performing topical analysis or conceptual clustering, 'related' sentences that are proximal to one another may be identified as a single disambiguated unit. Regardless of which segments are selected, the clip generation process utilizes the time stamp metadata located in the transcription to determine where in the video to generate the clip. In some cases, exact clip start, and end, timing may be modified slightly to ensure the clip does not start or end too abruptly. For example, the clip may start a minimum of approximately 200ms before the first word of the segment, but after the last word immediately preceding the segment, to ensure the clip 'flows' smoothly.

After the initial clip(s) have been generated, they are provided to a supervised ML model which compares the generated clips against a training set of video clips that humans have generated in the past (at 1450). When the clip that was generated generally comports to the training clips, the system accepts the clip (at 1460) and outputs the generated clip (at 1470) for further analytics. If the clip does not comport to the training clips, the generated clip may be discarded. The supervised model is trained on video clips generated by humans in addition to video clips generated by AI and labelled by humans. All clips generated by humans are "positive" samples (sentences that are relevant clips), all clips generated by AI labelled "relevant" are also added to the positive sample and finally all the clips generated by AI but labelled "irrelevant" are considered as negative sample. In some embodiments, where there are insufficient 'negative' samples, the system may generate artificial negative clips by selecting random sentences within all speech-to-text transcriptions found in the database, sentences that had no keywords (using same keyword list as the one used in previous steps of the clip generator) and are then considered as irrelevant sentences (negative samples). The supervised ML model is trained upon these samples based upon features including: the presence of verbs, the presence of adverbs, presence of nouns, presence of adjectives, presence of conditional words, presence of negation words, frequencies of the most differentiative words between all positive and negative samples, and grammatical construction of the sentence. Other features such as classical 'word embeddings', 'sentence embeddings', word count, etc. may likewise be leveraged. In some embodiments a Catboost classifier using the above features may be used to train the model.

Returning to Figure 13, once the video clips have been generated, they are then subject to insight generation (at 1360). Text data that has been consumed by the AI algorithm workflow has a less complex set of steps needed before it is subject to insight generation. With a text file, initially a quality check is performed (at 1313) whereby nonsensical text is discarded when identified. As noted, before, some participants may be tempted to input random characters (or merely hold down a single key) in order to fill in the text box until the minimum character count has been reached. Such data is clearly useless and is discarded. However, other data may also be discarded as being unreadable (due to such egregious spelling and grammatical errors as to make the text undiscernible) or filled with expletives or copied and pasted verbiage (such as merely copying and pasting the prompt for the task). For text files that survive this quality check (or in some cases before the quality filtering), basic spelling and grammar corrections may be applied to make the results more digestible. This basic cleaning step is not illustrated.

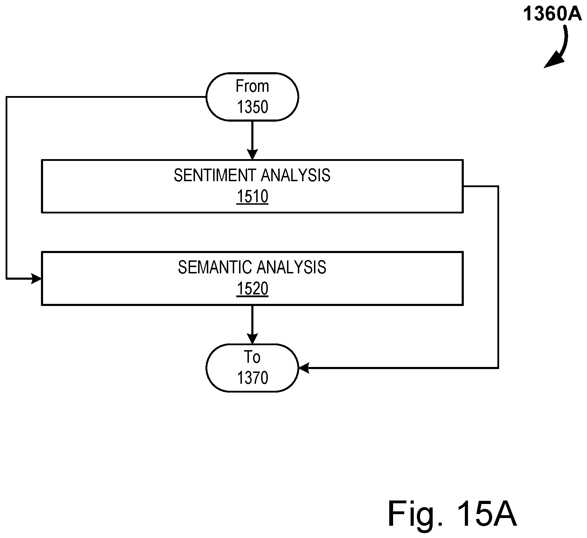

The resulting text is then provided to the AI modules for insight analysis (at 1360) just as the automatically generated video clips are. Insight analysis includes two discrete workflows operating in parallel, as illustrated at 15A and 15B respectively. Figure 15A provides a more detailed flow diagram for the first continuous workflow process of insight generation, shown generally at 1360A. It should be noted that the example insights generated through this example process are but one of any number of insight analysis workflows. As such, just because a specific insight analysis methodology is described herein, this does not preclude other insights from being generated in alternate ways.

The insight analysis disclosed herein depends upon two parallel AI driven analysis. The first is a sentiment analysis (at 1510) for the free form text and/or the video clip transcription. Sentiment analysis includes identifying particular keywords within the text, and associating them with a polarity (positive or negative), and a severity of the sentiment (weak to strong). One methodology of this sentiment analysis may leverage an AI model, as may be known in the art. It is also contemplated that the video portion itself may undergo advances sentiment analysis by analyzing facial expressions, or the audio may be leveraged to detect tone variations that are indicative of a particular sentiment. Again, AL algorithms are particularly useful for the analysis of sentiment from video and audio components.

In addition to sentiment analysis, the second parallel process is the semantic analysis (at 1520) of the text files. Semantic analysis identifies entities and qualifiers (known as a semantic pair). In some cases, the entity is a noun, and the qualifier is an adjective associated with the noun. In some particular embodiments, it may be desirable to have a certain level of standardization between the participants answers. For example, if one participant says, "the screen is pretty", and another participant states the "webpage is really good looking" the overall meaning of the sentences is similar. When results are being aggregated (discussed in more detail below), it may be advantageous to lump such results together to avoid too many insight categories (which could overwhelm the UX researcher, and based upon diversity of language used, provide a less clear picture of the study results). In order to present results in a more consistent and helpful way, the system may leverage conceptual taxonomies which consume the language and find 'prototypical' versions of the various entities and qualifiers. For example, 'screen' and 'webpage' may be associated with the category 'interface'. Words like 'pretty' and 'looks good' may be associated with the category of 'appearance'. As such, the semantic pairing for both these responses may be 'interface-appearance' with varying degrees of positive sentiment.

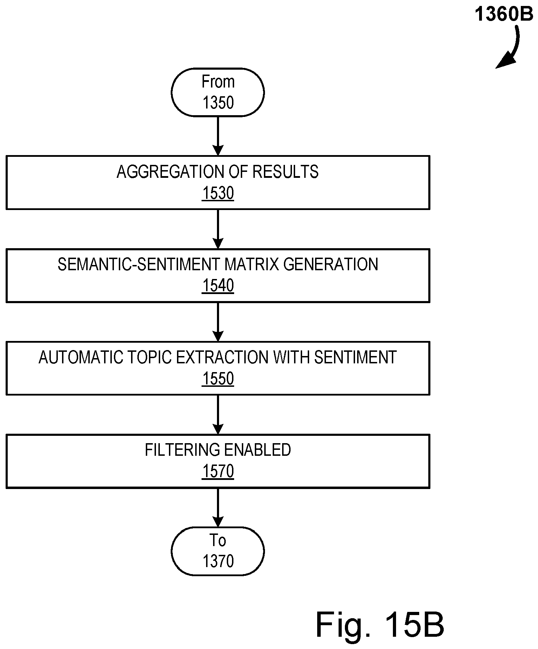

In the second, parallel workflow shown in Figure 15B, there is an aggregation of results and a parallel process, shown generally at 1560B, that is independent from the workflow of Figure 15A. As noted, the results are aggregated (at 1530) allowing for analysis of the general sentiments and the semantic pairings associated with the sentiments. Number of instances of a semantic pairing are collected, and for each of these semantic pairings, the sentiments for the various participants may be summed to get an overall sentiment for the semantic pair. These are considered insights and may be very helpful in the UX researcher's analysis of the user experience of a website (or another interface). For example, the semantic pair may include 'color-bright' with a positive sentiment, mentioned over 100 times. This lets the UX researcher know that the bright colors selected for the GUI are appealing to users, however a semantic pair of 'screen-clear' with a negative sentiment could indicate that the interface is too cluttered, or the organization of the webpage is counter intuitive. Number of instances of a semantic pair indicates the relative importance of the feature. For example, is the pair 'navigation-clear' is mentioned hundreds of times, but the pairing 'navigation-slow' is only mentioned a dozen times, the fact that there is a minor latency in loading a webpage is significantly less important than the ease/clarity of the navigation (particularly if the sentiment is extremely positive or negative for the given semantic pair).

These raw insights are useful in their own right; however they also may be manipulated in order to provide useful tools for the UX researcher's analysis. This includes, for example, the generation of a semantic-sentiment matrix (at 1540). In such a matrix, which has been touched upon previously in relation with Figure 18, the rows of the matrix may be populated by one part of the semantic pair, and the columns with the other part of the semantic pair. For example, each row of the matrix could comprise an entity, and the column could include the qualifier. At the matrix cell that intersects the two, the sentiment for the entity-qualifier pair (when present) may be displayed. In some embodiments, when a very large number of entities and qualifiers have been collected, only the top X qualifiers, and Y entities may be displayed on the matrix. In some embodiments, X and Y are the same number.

By limiting the size of the matrix to a manageable level and ensuring only the most important entities and qualifiers are shown, the UX researcher has an extremely digestible set of data directly available to them in an incredibly digestible format. The matrix may be filterable, and any cell in the matrix may be selectable by the UX researcher for display of all the underlying data (text and/or video segments) for review. The color coding of the matrix cells quickly allows the UX researcher to identify strengths in the user experience, and areas of concern. The color intensity (or opaqueness, or the like) relates to the number of occurrences of the given pair. A UX researcher may leverage the matrix to filter the contents, select pairs, identify details of the participant's answers for the selected pairs, generate their own insights from that pair (or multiple pairs) in the matrix, and repeat the process with other pairs. In some particular embodiments, the UX researcher can enter a keyword and it will cause the matrix to be filtered by the keyword (and/or conceptually similar words).

Returning to Figure 15, after matrix generation, the topics of a sentence, clause, or sentence cluster may be extracted using known topic analysis models (at 1550). Topics are then associated with sentiments, and this may form the basis of another insight that is made available to the UX researcher. All insights that have been generated (topic-sentiment pairs, semantic pairs, raw sentiments, and sentiment associated with a semantic pair) are all made available with a myriad of filtering tools available (at 1570). For example, any semantic pair may be filtered by the aggregate sentiment for the pair. Semantic pairs may also be filtered by the entity and/or the qualifier (e.g., all semantic pairs for the term 'search box' or 'ugly'). Individual transcriptions or text files may be filterable by topic or sentiment. Results may also be filterable by participant, participant attribute, specific task, or validation condition, for example.

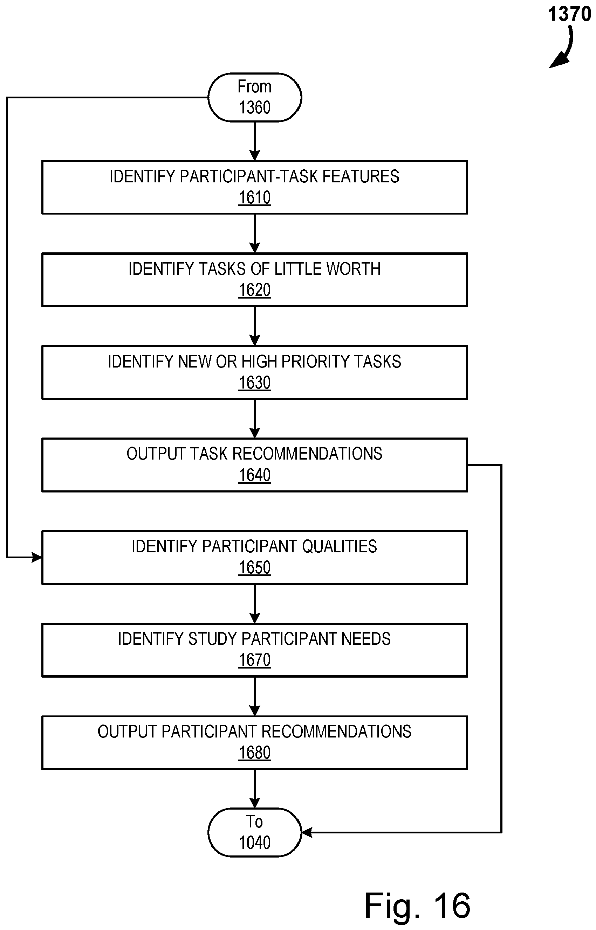

Returning now to Figure 13, after the insights have been generated, the recommendations (referenced earlier in relation to task building/deployment and participant selection) are generated (at 1370). Figure 16 provides more details of this recommendation generation process. This sub-process operates in multiple discrete workflows. For the purposes of this figure, only two such workflows are illustrated for the sake of brevity- one related to task recommendations, and the other related to participant recommendations. However, as previously touched upon, the recommendations are not limited to these two categories. For example, recommendations may be generated on-the-fly and in real-time in order to alter in-progress studies (e.g., requesting changes in participant behavior, altering tasks mid study, or prematurely ending a study, etc.).

For the first illustrated workflow, the participant-task features are initially identified (at 1610). Specifically, the results of a particular participant 'type' or attribute(s) of a participant and compared against performance on any given task. In some cases, for example, a participant with some set of attributes may perform better at a given task than another. Note, performing 'better' in this context does not necessarily mean they complete the task faster or more efficiently than others- rather it means that the participant is generating more actionable insights in their study results as compared against other participants. Tasks of 'little worth' (e.g., tasks that generate relatively few insights) are identified (at 1620). High priority tasks (e.g., tasks that generate large numbers of insights, or insights regarding a particular topic of interest) are likewise identified (at 1630). Based upon these measures, a set of task recommendations may be generated and output (at 1640). This may include determining which tasks should be assigned to a given participant. It may also determine which tasks to field more frequently than others. Lastly, the system may be able to take insights that are unexpected and generate new tasks for these insights (either automatically or in conjunction with the UX researcher, as previously discussed).

The second workflow includes participant recommendation generation. In this workflow, participant qualities are identified (at 1650). This may include sophisticated clustering of participants based upon behavior similarity, and then analyzing each cluster for trends in their collective attributes. When a new participant is onboarded, their attributes may then be compared against the identified sets of attributes, and the general behavior of the new participant can be estimated with some degree of confidence.

The needs of the study are then analyzed (at 1670), and specific needs may be identified. For example, as a study progresses, it may become apparent that there are not enough card sorting tasks being successfully completed. These needs may be compared against participant behavior predictions, and things like which tasks to present to which participant, or which participants to engage, are formulated. These participant recommendations are then outputted (at 1680).

Returning all the way to Figure 10, after all AI algorithm workflow elements are completed, the process progresses to the AI analytics workflow. The analytics workflow relates to the actual generation and display of analytics to the UX researcher. The analytics workflow relies heavily upon the analysis that has been performed by the algorithm workflow, and also independently leverages AL algorithms in the generation of the displays and output of these analyses.

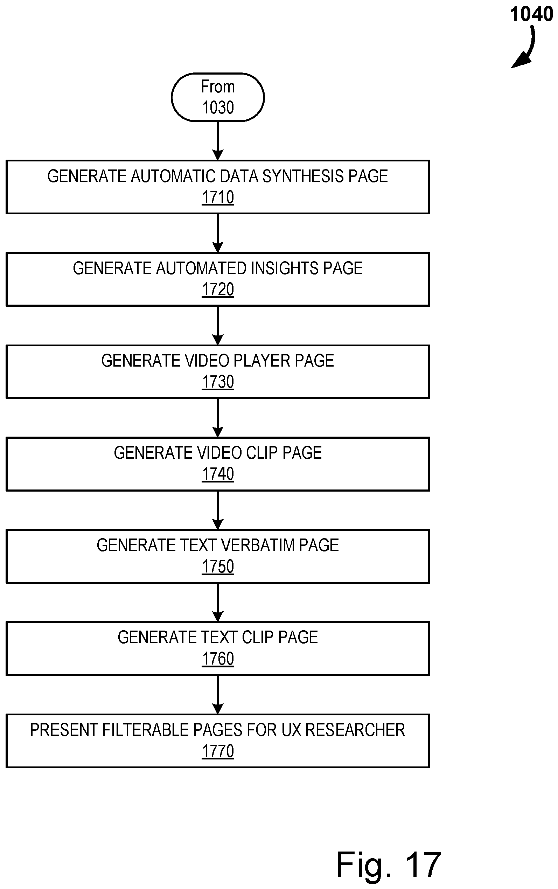

Figure 17 provides a more detailed example of the data analytics workflow, shown generally at 1040. In this sub-process, the system generates an automatic data syntheses page (at 1710), as already discussed.

Additionally, the workflow includes generating an insights page (at 1720), which collects all insights generated by the AI algorithm workflow and curates them for easy consumption by the UX researcher, as already touched upon.

A video player page is generated (at 1730) which displays the full videos that were collected from the participants. Again, videos may be filtered by topics/semantics, general sentiment, or by participant dimensions. At this page, full video, with annotated clips, are presented for the UX researcher to review. In this page the UX researcher is able to generate their own clips with an editing tool, and view transcriptions of the video as it plays. The researcher can search transcriptions for keywords, or by a sentiment or semantic tag. If a researcher does not wish to view the full videos, a video clip page is also generated (at 1740) which lists all video clips clustered by participant, task, sentiment and/or semantic pairs.

Similarly, the system may present to the UX researcher a verbatim text page, which is generated from all free form text (at 1750). The text may be organized in all the same dimensions as the video clips to aid in navigation from one relevant text to another. As with videos, the text may undergo a segmentation process by sentence, or topical elements. When this is performed, the text clips may be presented to the user in a text clip page that is generated by the system (at 1760). Again, all text clips can be filtered and organized by a full set of desired dimensions. All of these pages are made accessible to the UX researcher (at 1770) via a webpage or on an application on the UX researcher's device.

Depending on the level of expertise and the quality expectations of the UX researcher, the workflow can be optimized to fit his/her needs. For instance, customers with low level of expertise: directly uses automatic insights page, exports the results. The AI that does everything and generates the final report with the risk of lower quality insights. Customers with medium level of expertise: uses automatic data synthesis page, creates insights from the 2D matrix. The AI is an analysis assistant that helps producing synthetical and medium-quality insights. Lastly, customers with high level of expertise / UX experts within the company can use automatic data synthesis page in conjunction with all other pages (video player, video clips, text verbatim, text clip) when needing to review answers in detail for certain tasks. For these advanced users the AI is an analysis assistant that helps producing high quality insights.

Also, in some embodiments, all of these pages may be designed as a single analysis dashboard with all the raw data, in addition to summarized / AI data at the same place instead of being isolated on separate pages. In such situations the system has features to filter by granularity level (e.g., raw data vs insights) and with configuration modes that can be setup/adapted for each category of customers / persona (e.g., a specific config sets the default settings for the dashboard so that high expertise UX researchers see more elements on the dashboard than low expertise UX researchers).

Some portions of the above detailed description may be presented in terms of algorithms and symbolic representations of operations on data bits within a computer memory. These algorithmic descriptions and representations are the means used by those skilled in the data processing arts to most effectively convey the substance of their work to others skilled in the art. An algorithm is, here and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

The algorithms and displays presented herein are not inherently related to any particular computer or other apparatus. Various general-purpose systems may be used with programs in accordance with the teachings herein, or it may prove convenient to construct more specialized apparatus to perform the methods of some embodiments. The required structure for a variety of these systems will appear from the description below. In addition, the techniques are not described with reference to any particular programming language, and various embodiments may, thus, be implemented using a variety of programming languages.

In alternative embodiments, the machine operates as a standalone device or may be connected (e.g., networked) to other machines. In a networked deployment, the machine may operate in the capacity of a server or a client machine in a client-server network environment or as a peer machine in a peer-to-peer (or distributed) network environment.

The machine may be a server computer, a client computer, a virtual machine, a personal computer (PC), a tablet PC, a laptop computer, a set-top box (STB), a personal digital assistant (PDA), a cellular telephone, an iPhone, a Blackberry, a processor, a telephone, a web appliance, a network router, switch or bridge, or any machine capable of executing a set of instructions (sequential or otherwise) that specify actions to be taken by that machine.

While the machine-readable medium or machine-readable storage medium is shown in an exemplary embodiment to be a single medium, the term "machine-readable medium" and "machine-readable storage medium" should be taken to include a single medium or multiple media (e.g., a centralized or distributed database, and/or associated caches and servers) that store the one or more sets of instructions. The term "machine-readable medium" and "machine-readable storage medium" shall also be taken to include any medium that is capable of storing, encoding or carrying a set of instructions for execution by the machine and that cause the machine to perform any one or more of the methodologies of the presently disclosed technique and innovation.

In general, the routines executed to implement the embodiments of the disclosure may be implemented as part of an operating system or a specific application, component, program, object, module or sequence of instructions referred to as "computer programs." The computer programs typically comprise one or more instructions set at various times in various memory and storage devices in a computer, and when read and executed by one or more processing units or processors in a computer, cause the computer to perform operations to execute elements involving the various aspects of the disclosure.

Moreover, while embodiments have been described in the context of fully functioning computers and computer systems, those skilled in the art will appreciate that the various embodiments are capable of being distributed as a program product in a variety of forms, and that the disclosure applies equally regardless of the particular type of machine or computer-readable media used to actually effect the distribution

While this invention has been described in terms of several embodiments, there are alterations, modifications, permutations, and substitute equivalents, which fall within the scope of this invention. Although sub-section titles have been provided to aid in the description of the invention, these titles are merely illustrative and are not intended to limit the scope of the present invention. It should also be noted that there are many alternative ways of implementing the methods and apparatuses of the present invention. It is therefore intended that the following appended claims be interpreted as including all such alterations, modifications, permutations, and substitute equivalents as fall within the true spirit and scope of the present invention.

## Claims

1. A method for analyzing study results for a user experience (UX) study comprising:
storing information in a standardized format in a network based non-transitory storage device having insights stored thereon;
providing remote access to participants over a network so that any one of the participants can provide study results in real-time, wherein the one of the participants provides the study results in a non-standardized format dependent upon the hardware and software platform used by the one of the participants;
converting, by a server, the non-standardized study results into a standardized format, using at least one artificial intelligence (AI) model by:
segmenting at least one text from the study results into a plurality of segments of information;
identifying at least one entity and qualifier in the plurality of segment of information;
converting the at least one entity and qualifier into at least one semantic pair; and
identifying a sentiment for each of the at least one semantic pair;
generating an updated insight by synthesizing the at least one the semantic pair and sentiment;
automatically generating a message with the updated insight; and
transmitting the message to at least one UX researcher over the network so the UX researcher has real-time access to the updated insight.

2. The method of claim 1, wherein the converting the entity and qualifier pairs into a semantic pair includes substituting the entity and qualifier with a prototypical entity and qualifier, respectively, and wherein the entity is a noun and the qualifier is one of an adjective or a verb-adverb pair.

3. The method of claim 1, wherein the segmenting is by sentence.

4. The method of claim 1, wherein the segmenting is by topical segment.

5. The method of claim 1, wherein the study results include at least one of free-form text and video recordings, and wherein the video recordings are transcribed.

6. The method of claim 1, wherein the identifying a sentiment is performed by an AI model, and the entity and qualifier are identified by a different AI model.

7. The method of claim 1, wherein the identifying the sentiment includes identifying polarity and severity of the semantic pair.

8. A computer implemented system for analyzing study results for a user experience (UX) study comprising:
a database for storing information in a standardized format in a network based non-transitory storage device having insights stored thereon;
a network interface for providing remote access to participants over a network so that any one of the participants can provide study results in real-time, wherein the one of the participants provides the study results in a non-standardized format dependent upon the hardware and software platform used by the one of the participants;
a server for converting the non-standardized study results into a standardized format, using at least one artificial intelligence (AI) model by:
segmenting at least one text from the study results into a plurality of segments of information;
identifying at least one entity and qualifier in the plurality of segment of information;
converting the at least one entity and qualifier into at least one semantic pair; and
identifying a sentiment for each of the at least one semantic pair;
generating an updated insight by synthesizing the at least one the semantic pair and sentiment;
the server further for automatically generating a message with the updated insight, and transmitting the message to at least one UX researcher over the network so the UX researcher has real-time access to the updated insight.

9. The system of claim 8, wherein the converting the entity and qualifier pairs into a semantic pair includes substituting the entity and qualifier with a prototypical entity and qualifier, respectively, and wherein the entity is a noun and the qualifier is one of an adjective or a verb-adverb pair.

10. The system of claim 8, wherein the segmenting is by sentence.

11. The system of claim 8, wherein the segmenting is by topical segment.

12. The system of claim 8, wherein the study results include at least one of free-form text and video recordings, and wherein the video recordings are transcribed.

13. The system of claim 8, wherein the identifying a sentiment is performed by an AI model, and the entity and qualifier are identified by a different AI model.

14. The system of claim 8, wherein the identifying the sentiment includes identifying polarity and severity of the semantic pair.
